(19) **Europäisches Patentamt / European Patent Office / Office européen des brevets**

(11) **EP 3 396 901 B1**

(12) **EUROPEAN PATENT SPECIFICATION**

(45) Date of publication and mention
of the grant of the patent:
**05.08.2020   Bulletin 2020/32**

(21) Application number: **17836598.7**

(22) Date of filing: **05.06.2017**

(51) Int Cl.:
***H04L 12/44*** *(2006.01)*

(86) International application number:
**PCT/JP2017/020839**

(87) International publication number:
**WO 2018/025491 (08.02.2018 Gazette 2018/06)**

(54) **CONTROL NETWORK SYSTEM AND NODE DEVICE THEREOF**

NETZWERKSTEUERUNGSSYSTEM UND KNOTENVORRICHTUNG DAFÜR

SYSTÈME DE RÉSEAU DE COMMANDE ET DISPOSITIF DE NOEUD ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **05.08.2016   JP 2016154931**

(43) Date of publication of application:
**31.10.2018   Bulletin 2018/44**

(73) Proprietor: **Fuji Electric Co., Ltd.
Kawasaki-shi,
Kanagawa 210-9530 (JP)**

(72) Inventor: **KUBOSUMI, Hajime
Kawasaki-shi,
Kanagawa 210-9530 (JP)**

(74) Representative: **MERH-IP Matias Erny Reichl
Hoffmann
Patentanwälte PartG mbB
Paul-Heyse-Strasse 29
80336 München (DE)**

(56) References cited:
EP-A1- 2 375 632        WO-A1-2015/128981
JP-A- 2016 005 247      US-A- 5 012 469
US-A1- 2001 028 631     US-A1- 2011 255 549
US-B1- 6 711 131

## Description

## Technical Field

The present invention is related to a network transmission method for achieving a larger transport capacity of an entire full-duplex network of a star topology.

## Background Art

Plant control transmission systems perform two types of data communications, namely, data communications (data exchange) periodically performed by each of the devices constituting the system with the others with guaranteed real-time property and data communications (message communications) in which an unidirectional access is made as an event in response to an access request made by the application included in each device.

The above two types of data communications are sometimes performed by dividing a communication cycle into a band (common memory transport band (TS band)) in which data communications are performed with guaranteed real-time property and a band (message transport band (MSB band)) in which unidirectional accesses are made as events. "With guaranteed real-time property" means for example the completion of data exchange within each cyclic period (TS band) between all devices that need to exchange data.

While various methods have already been proposed as broadcasting communications methods efficient in a network for performing the above data exchange, examples of such methods are the inventions of Patent Document 1 and Patent Document 2.

The invention of Patent Document 1 uses both a time-division multiplexed access method that utilizes a timer embedded in each node and embedded-timer correction of a slave node performed by a synchronization frame from a master node, and thereby realizes highly efficient transport while preventing the overlapping between timings of transmission from the respective nodes.

Patent Document 2 for example discloses a conventional technique similar to that of Patent Document 1 as well.

In data communications such as a message communication in which unidirectional accesses are made as events, "the number of the message-transmission requests per unit time" for a station participating in the network involves "variations", and "the number of the message-transmission requests per unit time" sometimes exceeds "the number of messages that can be transported". This leads to the need to set an upper limit on "the number of the transmissions possible per unit time (for each communication cycle)" so that messages are communicated without exceeding the set upper limit. To meet the need, the number of the stations that are permitted to perform transmission within a unit time is managed so that a station that has been allotted a transmission right performs data communications, and thereby data communication is performed without exceeding "the upper limit of the number of the transmissions possible per unit time".

While various techniques have already been proposed as message communication methods that implement the above data communication, one of such examples is a token method. In a token method, the master station receives a message-transmission request from each station, and grants, in the form of token, a transmission right to some of the stations that reported a transmission request. Only a station granted a transmission right is eligible to perform message communications, and a station granted a transmission right transmits a message frame to a network circuit. Granting transmission rights without exceeding "the upper limit of the number of the transmissions possible per unit time" realizes data communications in which unidirectional accesses are made as events without exceeding the number of the transmissions possible per unit time.

EP 2 375 632 A1 shows a magnetic field communication method which is accomplished in a low-frequency wireless network.

[Patent Document 1] Japanese Laid-open Patent Publication No. 2005-159754
[Patent Document 2] International Publication Pamphlet No. WO2013/121568

## Disclosure of the Invention

The above conventional methods described in Patent Document 1, Patent Document 2, and other documents employ cascade connections using a bus or a serial cable for the physical layer, and thereby a station can transmit data to all the other stations through broadcasting at a time. It is assumed that different nodes receive the broadcast data at the same time or receive the data with an almost ignorable time difference.

Star topologies based on standards such as IEEE802.3u (100BASE-TX) and IEEE802.3ab (1000BASE-T) are known.

Applying the above message communication method based on a token method to a full-duplex circuit of a star topology that uses Ethernet as the physical layer leads to the following problems.

When a star topology is employed for a full-duplex circuit that uses Ethernet as a transport path, such as 100BASE-TX, 1000BASE-T, etc., the resulting configuration transports data assuming that frame data transmitted from a station is relayed by a relay device such as a switching hub for message communications. Relaying data through a relay device such as a switching hub is typically accompanied by a certain level of relay delay, and accordingly multicasting a frame data of one station to all stations leads to, at a maximum, the transport delay and transport time equivalent to the number of the relay devices set on the largest relay route.

When a message communication is performed using a token method on this assumption, a large portion of the transport band is in an unoccupied state or a transporting state that is not a message communication state because they are in a token frame transporting state for reporting a transmission right and a relay waiting state for relaying a frame. This results in a problem in which the transport efficiency deteriorates for the entire network, preventing an increase in the capacity.

It is an object of the present invention to provide a control network system that can increase the message transport efficiency for the entire network and thereby to increase the amount of messages transported per unit time for the entire network in a network system of a full-duplex circuit of a star topology, and also to provide a node device etc. thereof.

A control network system according to the present invention is a network system in which a plurality of node devices exchange data mutually via a relay device in each communication cycle that includes a first band and a second band, which is later than the first band.

Each of the plurality of node devices has the following units.

- A data exchange control unit configured to transmit a message-transmission request in the first band when there exists a message-transmission request;
- A message permission determination unit configured to determine, on the basis of the message-transmission request obtained in the first band, whether a node device is permitted to transmit message, the node device being the node device to which the message permission determination unit belongs; and
- A message transmission control unit configured to transmit a message at a prescribed timing in the second band if the node device to which the message transmission control unit belongs is determined to be permitted to transmit message.

**Brief Description of the Drawings**

FIG. 1(a) and FIG. 1(b) show the entire configuration of a control network system of the present example;
FIG. 2(a) and FIG. 2(b) are flowcharts of processes performed by the driver of a node;
FIG. 3 illustrates an example of data transmission-reception operations of the present example;
FIG. 4 is a flowchart of a process performed by the process unit of a node;
FIG. 5 illustrates a message transmission-reception operation example (first) in an MSB band in which the number of the stages of the relay device is one;
FIG. 6 illustrates a message transmission-reception operation example (second) in an MSB band in which the number of the stages of the relay device is one;
FIG. 7 illustrates a network configuration example in which the number of the stages of the relay device is two;
FIG. 8 illustrates a message transmission-reception operation example (first) in an MSB band in which the number of the stages of the relay device is two;
FIG. 9 illustrates a message transmission-reception operation example (second) in an MSB band in which the number of the stages of the relay device is two;
FIG. 10 illustrates a network configuration example in which the number of the stages of the relay device is three;
FIG. 11 illustrates an operation example for measuring a longest-route delay time;
FIG. 12 illustrates a longest route in the network configuration example of FIG. 10;
FIG. 13 illustrates a formula for calculating an upper limit value;
FIG. 14 illustrates a functional configuration of a control network system according to the present example;
FIG. 15 is a flowchart illustrating a method of calculating an upper limit value;
FIG. 16 is a process flowchart for a specific example of obtaining an upper limit value;
FIG. 17 illustrates a specific example of a communication operation in a star topology; and
FIG. 18 is a flowchart illustrating a process example of a process unit in each station for a case where a conventional method is applied.

**Best Modes for Carrying Out the Invention**

Hereinafter, explanations will be given for the embodiments of the present invention by referring to the drawings.

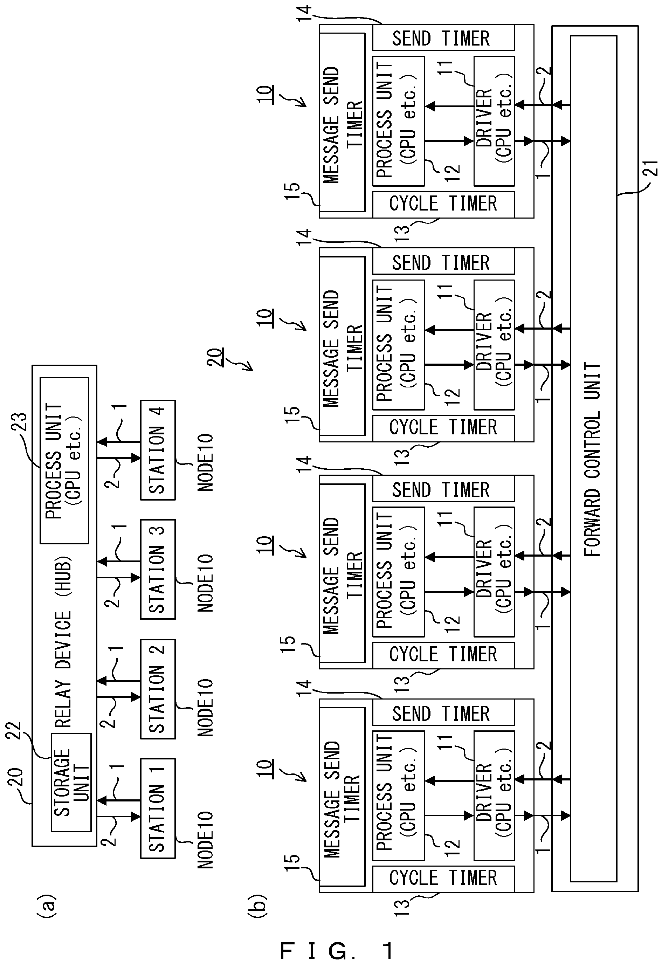

FIG. 1(a) and FIG. 1(b) illustrate an entire configuration of a control network system of the present example.

FIG. 1(a) illustrates a schematic configuration of the control network system of the present example.

In the control network system of the present example, a plurality of nodes 10 are connected via at least one relay device 20 through a full-duplex communication circuit in a star topology. The control network system is also a network system in which each of the nodes 10 mutually exchanges data via the relay device 20 in the TS band in each communication cycle having the above TS band and the above MSB band.

The control network system is also based on an assumption that the synchronization methods of the earlier applications such as Patent Document 1, Patent Document 2, etc. for example are used so that the communication cycles of all the nodes 10 are in synchronization and thus that the MSB bands start at the same timing, although this will not be explained particularly. Note that the method of synchronizing the communication cycles is not limited to the methods described in the above earlier applications, but any known methods may be used to synchronize the cycles.

When there is a message-transmission request upon the mutual data exchange, each node 10 in a control network system such as the above according to the present invention adds information (a command, the number of the requests, etc.) indicating that fact to the corresponding data in a TS band. After the completion of the data exchange in the TS band, each node 10 uses the same algorithm to determine the permitted station and the number of the permissions on the basis of the presence or absence of a message-transmission request and the number of the requests for all the nodes 10. Thereby, all the permitted stations can start message transmissions at the start of the MSB band (without a token).

The elimination of permission reports (granting of a transmission right) that use a token makes it possible to efficiently use an MSB band only for message transport, and thereby more messages can be transmitted than in the conventional techniques. In other words, the entire network can transport more messages per unit time.

The above determination of the permitted station/the number of the permissions uses a prescribed upper limit value. This upper limit value is set in such a manner that all messages transmitted in the MSB band are transported without exceeding the upper limit of the band (MSB band) of the relay device in which transport is possible. Thereby, the transmission and reception of all messages are surely completed in an MSB band.

Again, the configuration example of FIG. 1 is explained.

As described above, the control network system of the present example employs a configuration of a full-duplex circuit of a star topology, and the devices (the nodes 10) constituting the system are connected to the relay device 20 such as HUB (switching hub) via full-duplex circuits (communication lines 1 and 2) in the illustrated example. Note that the illustrated example includes four stations, i.e., station 1, station 2, station 3, and station 4 as the nodes 10.

Each node 10 can communicate with the other nodes 10 via the relay device 20. It is assumed in this example that a communication line 1 is for transmitting data from the node 10 to the relay device 20 (upstream) and a communication line 2 is for transmitting data from the relay device 20 to the node 10 (downstream).

The relay device 20 may be a widespread switching hub etc., and naturally has a function of relaying a data frame etc. , although the configuration/operations thereof will not be illustrated/explained. This includes for example a storage unit 22 such as a RAM etc. that temporarily stores a received data frame, and also includes a process unit 23 (CPU etc.) etc. that forwards the temporarily stored data frame to a destination node. The memory embedded in the process unit 23 stores a prescribed program in advance, and the CPU of the process unit 23 executes this program so that the relay device 20 implements the function of relaying packets. The relay device 20 has a known function as the function of relaying packets, and detailed explanations will be omitted for the function.

The relay device 20 has ports (not illustrated) to which the communication lines 1 and 2 are connected, and transmits data frames through ports corresponding to the destination stations of the data frames so as to relay/forward the data frames, the data frames being received through an arbitrary port.

When for example data is transmitted from station 1 to station 4 in the configuration of FIG. 1, the data frame is transported from station 1 to the relay device 20 through the communication line 1, and is forwarded to station 4 from the relay device 20 through the communication line 2 after being temporarily stored in the relay device 20.

While the relay device 20 is for example a switching hub etc. of a non-blocking type in this explanation, the relay device 20 is not limited to this example. A forward control unit 21 of the relay device 20 can perform transmission when the total number of the transmissions is lower than the upper limit of the transmission performance of each port (such as 1 Giga (G) bits per second) . It is thus desirable to determine the upper limit value on the basis of for example formula (1), which will be described later; however the scope of the present invention is not limited to this example. The calculation of the upper limit value based on formula (1) will be described later in detail.

As described above, the conventional techniques use message bands for communications for granting a transmission right in the form of token, often being in a state in which it is not substantially transporting messages. This results in low total efficiency in transporting messages.

The present invention does not employ a master-slave system for message transport, and thereby a master does not give permissions in the form of token, making it possible to implement message transport highly efficiently. As described above, "does not employ a master-slave system" means that a master-slave system is not employed for message transport and that a specific station (master) does not manage a token related to message transport. This also means that a master-slave system may be employed for aspects other than message transport.

The control network system of the present example is a full-duplex circuit using Ethernet as a transport path, such as 100BASE-TX, 1000BASE-T, etc., and uses a star topology (a LAN for example). Accordingly, while the configuration includes one relay device 20 or more, the figures illustrate only one relay device 20 for the sake of simplicity; however the scope of the present invention is not limited to this example.

Also, the control network system of the present example, similarly to the conventional techniques, employs a configuration in which each of the devices (the nodes 10; stations) constituting the system not only generates a data switching period (communication cycle) by using the timer included in the device and generates a TC band and a TS band used for exchanging data in a communication cycle, but also generates a band (message band; MSB band) for performing data communications (such as message communications) in which unidirectional accesses are made as events. Explanations will not be given for the TC band or the TS band here.

Communications in which unidirectional accesses are made as events involve "variation" in the number of message-transmission requests per unit time for stations participating in the network, and may have a total number of the requests per identical unit time that exceeds "the number of messages that can be transported". This leads to the need to set an upper limit value on "the total number of the message transmissions per unit time" so that messages are communicated without exceeding the set upper limit value. To meet the need, the number of the stations that are permitted to perform transmission within a unit time is managed so that only a permitted station performs message communications, and thereby "the total number of the message transmissions per unit time" does not exceed the upper limit value.

In an example, the devices (the nodes 10) constituting the system have to exchange data mutually in the TS band in the control network system of the present example. For example, data exchange has to be completed between all the nodes 10 in for example the TS band in the communication cycle. In other words, for example, each of all the nodes 10 has to deliver arbitrary data of itself to all the other nodes 10 in the TS band in each communication cycle. While the data to be exchanged is for example data related to a control-target device belonging to the station (such as sensor measured value), the scope of the present invention is not limited to this example. While each node 10 is for example a controller etc. that controls a control-target device (not illustrated), the scope of the present invention is not limited to this example.

Meanwhile, all the messages generated at a certain moment in a message transport band (MSB band) do not have to be transmitted and received in the MSB band of one communication cycle. However, it is desirable that as many messages as possible be transmitted and received in one communication cycle with increased transport efficiency. At the same time, because the length of an MSB band is defined in advance as described above, it is necessary to avoid a situation in which an MSB band is terminated before the completion of a message transmission/reception process.

The present invention increases the transport efficiency in transmission and reception of messages in the above message transport band (MSB band).

To achieve this goal, data exchange in the above TS band is utilized first. Specifically, the node 10 having a message-transmission request adds a message-transmission request (such as the number of the requests) to a transmission data of the TS band (which will be referred to as a common memory frame). As described above, because each of all the nodes 10 delivers the data of itself to all the other nodes 10 in the TS band, all the other nodes receive the message-transmission request.

Thereby, each of the nodes 10 uses the same algorithm to determine the allotment of message transmission rights, making it possible for all the nodes 10 to obtain the same transmission right allotment result. Each of the nodes 10 can detect whether message transmission is permitted, the number of the permissions, etc. for itself from the transmission right allotment result determined in itself.

As described above, each of the nodes 10 in the present invention can independently confirm whether message transmission is permitted, the number of the permissions, etc. for itself on the basis of the message-transmission requests (the number of the requests etc.) from other stations. This eliminates the need to transmit or receive a token in a message transport band, and all the nodes 10 confirming that they are permitted stations can immediately transmit a message. For example, a configuration is employed in which all the message-transmission-permitted station can transmit messages to the relay device 20 simultaneously and immediately at the start of an MSB band. This can increase the message transport efficiency of the entire network in an MSB band and increase the amount of message transport per unit time of the entire network (throughput).

Also, keeping the total number of the permissions below a prescribed upper limit value for a process of determining the allotment of message transmission rights by using the same algorithm makes it possible to complete the transmission and reception of all the messages in an MSB band. Regarding this, the present invention can calculate an appropriate value for the above upper limit value. The value is calculated by for example using formula (1) etc., which will be described later. Also, at least one arbitrary node 10 has a function of calculating the above upper limit value, making it possible to calculate an appropriate upper limit value that can respond to a new configuration even when the network has shifted to a new configuration during the operation.

FIG. 1(b) illustrates a detailed configuration example of the control network system illustrated in FIG. 1(a) .

In the illustrated example, each of the nodes 10 includes a driver 11, a process unit 12, a cycle timer 13, a send timer 14, a message send timer 15, etc. The cycle timer 13 is a timer for generating the above communication cycle, and is synchronized with the other cycle timers 13 among all the nodes 10 although the detailed explanations will be omitted. The send timer 14 is a timer for determining a data transmission timing in a TS band for the station to which it belongs, although the detailed explanations will be omitted.

In each of the nodes 10, the message send timer 15 determines a data transmission timing in an MSB band for the node to which it belongs. Note that it is sufficient if the master station includes a conventional message send timer (not illustrated), and the master station transmitted a token when the timer expires ("T.O." in the figures).

In the present example, the message send timers 15 are set to expire at the same timing for all the nodes 10. In other words, setting has been conducted in such a manner that the expiration of the message send timers 15 coincide with the start of an MSB band for all the nodes 10. For example, the message send timers 15 of all the nodes 10 have an identical set value, and are set to be activated upon the expiration of the cycle timers 13.

The message send timer 15 does not always have to be provided, and the send timer 14 may be set to be reactivated so that it will expire at the start of an MSB band.

The process unit 12 performs main processes for the node 10, and performs various processes including for example the control of a control-target device (not illustrated), the collection of pieces of measurement data indicating the state of the control-target device, the management of setting/activation of the cycle timer 13, the send timer 14, the message send timer 15, etc., and the generation of a transmission data frame (packet). The generated packet is delivered to the driver 11.

The driver 11 is a process unit (such as a processor dedicated to communications) that performs communications process through the communication lines 1 and 2, the communications process primarily including transmitting a transmission data frame in response to a request from the process unit 12 to a different node, delivering a transmission data frame received from a different node to the process unit 12.

The communication lines 1 and 2 are connected to the driver 11. Also, the communication lines 1 and 2 are connected to the relay device 20 as described above. When the driver 11 transmits the transmission data frame to a different node, the driver 11 transports the packet addressed to that node to the relay device 20 through the communication line 1. When receiving a transmission packet from a different node forwarded by the relay device 20 through a communication line, the driver 11 delivers the packet to the process unit 12.

The relay device 20 includes the forward control unit 21 (illustrated), and the forward control unit 21 relays/forwards the packet.

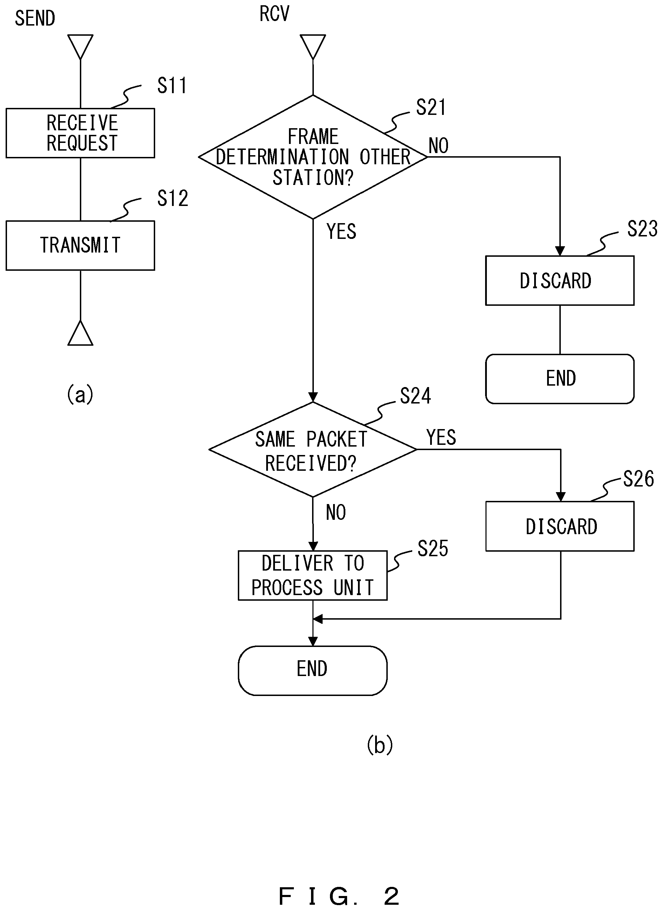

FIG. 2(a) and FIG. 2(b) are flowcharts illustrating a process performed by the driver 11 of the node 10. The arithmetic processor (not illustrated) included in the driver 11 executes an application program stored in an embedded memory (not illustrated) in advance, and thereby the processes illustrated in FIG. 2(a) and FIG. 2(b) are implemented.

FIG. 2(a) illustrates a process performed by the driver 11 for transmitting data of the station to which it belongs.

The process unit 12 (such as a CPU/MPU) included in the node 10 executes prescribed software (program) etc. so as to perform a prescribed control process etc. When an event occurs in which data of the station to which the process unit 12 belongs as one of the processes (an example of which is the expiration of the send timer 14), the process unit 12 delivers that data and a transmission request to the driver 11.

When receiving the data and transmission request above (step S11), the driver 11 transmits the corresponding data frame (step S12). The data frame is transmitted to the relay device 20 through the communication line 1 and is relayed as described above.

In some cases, transmission data (packet) is received from a different station. Such transmission data is forwarded by the relay device 20 through the communication line 2 as described above.

FIG. 2(b) illustrates a process performed by the driver 11 for receiving data.

When receiving an arbitrary packet through the communication line 2, the driver 11 performs the process illustrated in FIG. 2(b). First, the driver 11 detects the transmission source of the received packet, and discards the packet (step S23) when the transmission source is the station to which it belongs (NO in step S21). Alternatively, the driver 11 discards the packet (step S26) also when the driver 11 has already received the same packet (YES in step S24). These situations would not occur in normal circumstances and can be considered to be abnormal situations, and thus the received packet is discarded.

When the result in step S24 is NO, i.e., when the situation has no abnormalities, and the reception can be considered to be normal, the data of the received packet is delivered to the process unit 12 (step S25). The process unit 12 uses this data to perform a process.

Note that a packet in the processes illustrated in FIG. 2(a) and FIG. 2(b) may be a data packet (common memory frame) transmitted and received in the above TS band or may be a packet of a message transmitted and received in the above MSB band.

It need not be mentioned that each packet (data frame) has identification numbers of the transmission source node and the destination node (such as station IDs) allotted to the packet.

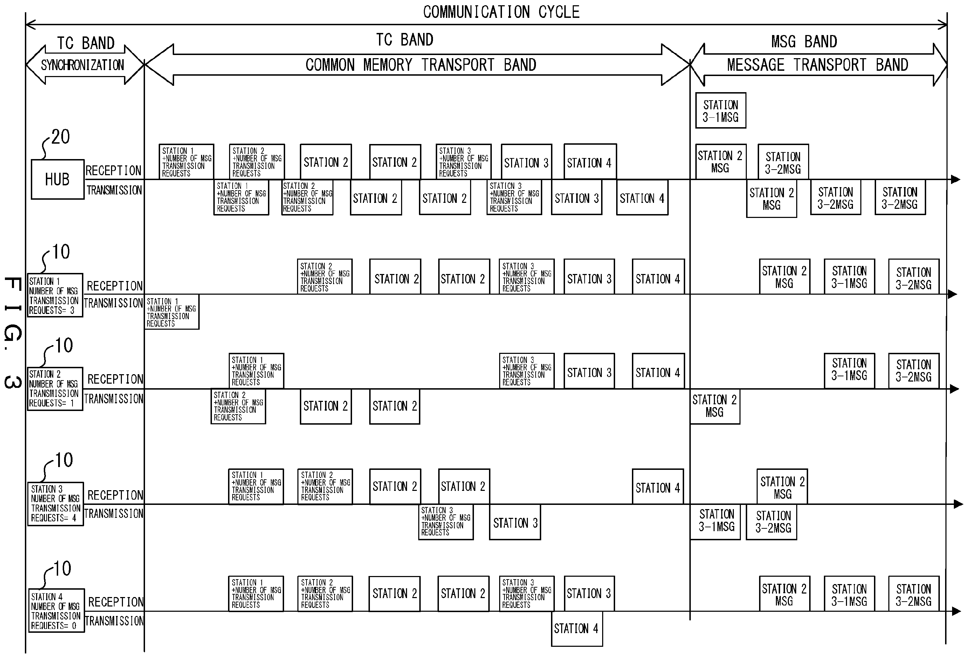

FIG. 3 illustrates an example of a data transmission-reception operation of the present example.

Similarly to the conventional techniques, the cycle timer 13 generates the communication cycle illustrated in FIG. 3 in the present example. The cycle timer 13 is activated, expires, is activated, expires, is activated... in a repeated manner, and generates a cyclic communication cycle (illustrated).

One communication cycle includes a TC band, a TS band, and an MSB band as illustrated.

The TS band is a band in which the nodes 10 exchange data mutually although detailed explanations will not be given for the TC band or the TS band. "Exchange data mutually" herein means that each of all the nodes 10 delivers its data to all the other nodes 10. The timing at which each of the nodes 10 transmits its data in the TS band is determined by the send timer 14 of that node 10. All the send timers 14 are activated at the expiration of the cycle timers 13.

Common memory transport requiring guaranteed real-time property is performed in a common memory transport band (TS band). Message transport in which unidirectional accesses are made as events is performed in a message band (MSB band) that is set separately.

The data transmission operation performed in each node in the TS band will be explained briefly, although detailed explanations will be omitted. First, the send timer 14 of each of the nodes 10 has in advance a set value that is different from the others and expires at a timing different from the others . Each of the nodes 10 transmits its data upon the expiration of the send timer 14 belonging to it. The data is addressed to all the other nodes 10 (broadcast), and the relay device 20, when receiving the data, forwards it to all the other nodes 10.

Note that the "transmission" included in the "reception" and "transmission" operations performed by the relay device 20 in FIG. 3 refers to the transmission of a packet to all the destinations (all the nodes 10 except the transmission source in the present example as described above) . For example, the rectangle denoted by "station 2" on the figure for the TS band refers to a transmission packet from station 2 (which will be referred to as "station 2 packet" etc. hereinafter). As illustrated in the figure, when completing the reception of this "station 2 packet", the relay device 20 immediately starts the transmission (forwarding) to all the stations except the transmission source (station 2). Because of this, the "station 2 packet" has been received by station 1, station 3, and station 4, but has not been received by station 2 as illustrated in the figure.

More specifically, when starting the reception of "station 2 packet" via the port for station 2, the relay device 20 stores the packet in the embedded memory (such as a RAM). After completing the storing of all the pieces of data of "station 2 packet" in the embedded memory (upon the completion of the reception), the relay device 20 simultaneously transmits this "station 2 packet" via the ports respectively for station 1, station 3 and station 4.

The number of the transmission packets in the TS band is in advance determined for each of the nodes 10, and for example while station 1 always transmits only one packet, station 2 always transmits three packets in the illustrated example. The send timer 14 of each of the nodes 10 has a set value determined in advance in accordance with the number of the transmission packets for each of the nodes 10.

While the operations related to the TS band of the earlier applications have been described above, the present invention further performs the following operations in relation to the TS band.

Specifically, each of the nodes 10 in the present invention, when it is necessary to transmit a message, adds information to part of a common memory frame to be transmitted in the TS band, the information representing the message-transmission request (such as the number of the requests in the present example), and thereby reports to all the other nodes 10 the existence of the message-transmission request and the number of the requests.

When receiving the common memory frame to which the number of the transmission requests has been added, each of the nodes 10 temporarily stores the number of the message-transmission requests together with the identification information of the node 10 as the transmission source. Each of the nodes 10 later determines the transmission-permitted station and the number of the permissions of message on the basis of the above temporarily stored data. All the nodes 10 use the same algorithm in this determination process, and thereby all the nodes 10 obtain the same determination result under normal conditions.

For example, each node 10 determines the priority order by using an identical method such as a round-robin method, and determines a station to which a transmission right is to be allotted. In this situation, if all the common memory frames are successfully transported to their corresponding nodes 10, i.e., all the nodes 10, all the nodes 10 can obtain the same transmission right allotment result (permitted stations and the numbers of the permissions) by applying the same determination algorithm (which will be referred to as a determination algorithm for transmission-right-allotted station) in all the nodes 10 as described above.

On the basis of the determination result of the above transmission-right-allotted station, each node 10 determines whether message transmission is permitted for itself (and further detects the number of the transmission permissions if the transmission is permitted), and starts the transmission of a message frame at the start of the MSB band when the transmission is permitted. While this means that all the nodes 10 permitted to transmit messages start the message transmission at the same time as the start of the MSB band, the scope of the present invention is not limited to this example.

If the total number of the message transmissions is smaller than or equal to the upper limit of the transmission performance of each port of the relay device 20, transmissions are possible. It is thus desirable that the upper limit value be determined by for example formula (1), which will be described later; however the scope of the present invention is not limited to this example. The calculation of the upper limit value by using formula (1) will be described later in detail.

As described above, the present invention utilizes data exchanges in the TS band so that the node 10 having a message-transmission request adds the message-transmission request (such as the number of the requests) to a data frame that the node 10 is going to transmit, making it possible to report, to all the other nodes 10, the presence or absence of a transmission request, the number of the requests, etc.

At the end of the TS band, each of all the nodes 10 can detect the presence or absence of a message-transmission request and the number of the requests for all the stations including itself, making it possible for each node 10 to perform a process of determining a transmission-right-allotted station (step S44 or other steps, which will be described later) and to obtain the same determination result as described above. In this process, the permitted stations and the number of the permissions of message transmissions are determined on the basis of for example the presence or absence of a message-transmission request for all the stations, an upper limit value that is determined in advance, the current priority order of each station, etc.

In the example illustrated in FIG. 3, station 1, station 2, and station 3 have a message-transmission request, and station 4 does not have a message-transmission request. Also, the numbers of the requests are "3", "1", and "4" respectively for station 1, station 2, and station 3.

It is assumed in this example that the entire system can transport three message frames in the MSB band (the upper limit value=3, and a method of calculating the upper limit value will be described later) and that the priority is given in order of station 2, station 3, station 4, and station 1. Accordingly, permissions are given in the order of station 2, station 3, station 4, and station 1. First, station 2, which has one message-transmission request while three message frames can be transmitted in the MSB band, can transmit that message frame and the number of the permissions = "1". Next, the number of the permissions is "2" for station 3, which has four message-transmission requests while the MSB band then can transmit two message frames. Because the total number of the permissions has reached the upper limit value, station 1 will not be permitted (station 4 has not made a request).

Each node 10 detects, for each requesting node, whether that node is permitted and also detects the number of the permissions through the above determination process (step S44 or other steps), and thereby will detect whether itself is permitted and the number of the permissions (step S45, which will be described later).

In the above example, each of all the nodes 10 determines that "station 2 and station 3 are permitted stations, and the numbers of the permissions are "1" and "2" respectively for station 2 and station 3" as a result of the determination process. As a result, station 2 detects that it is permitted to transmit message with the number of the permissions being "1", and station 3 detects that it is permitted to transmit message with the number of the permissions being "2". Meanwhile, station 1 detects that it is not permitted to transmit message this time.

Thereby, station 2 and station 3 start the transmission of the messages of themselves exactly at the start of the MSB band without receiving a token, as illustrated in the figure. As described above, station 2 transmits one message, and station 3 transmits two messages.

As described above, because token-related communication operations are not necessary, all permitted stations can start transmitting messages at the start of the MSB band, increasing the message transport efficiency so that more messages can be transported than in the conventional techniques.

In the operations of the MSB band illustrated in FIG. 3, the rectangular denoted by "station 3-1 MSG" for example refers to a transmission message from station 3. Also, in the reception operation of the relay device 20 illustrated in the figure, the positional relationship in which "station 3-1 MSG" and "station 2 MSG" are in the same vertical direction indicates that the processes of receiving these two messages are being performed in parallel. Thereafter, "station 3-2 MSG", which is the second message from station 3, is being received.

In the present example, it is assumed that all of the three messages are addressed to all the stations and thus, the relaying operation as illustrated in the figure is performed. In other words, the relay device 20 first forwards "station 2 MSG" to all the nodes 10 except the transmission source (station 2), and station 1, station 3, and station 4 receive "station 2 MSG" as illustrated in the figure. Similar operations are conducted for other messages such as "station 3-1 MSG", and the explanations thereof will be omitted.

Note that the above priority order is determined on the basis of for example the current count value of a prescribed counter (not illustrated). Although this counter is not illustrated, the value is incremented by one each time step S34 becomes YES. Also, this counter cyclically counts from one through four as in 1, 2, 3, 4, 1, 2, 3, 4, 1... in the present example. A node 10 having a station number equal to the count value has the highest priority. For example, when the count value of the counter is "3", station 3 has the highest priority, and the priority is in the order of station 3, station 4, station 1, and station 2 starting from the station with the highest priority.

In the above example, the process in step S44, which will be described later, can be considered to be a process in which whether message transmission is permitted and the number of the permissions is determined for each node on the basis of a prescribed algorithm (formula (1), which will be described later), the presence or absence of a message-transmission request and the number of the requests for each node 10, the upper limit value, and the current priority order.

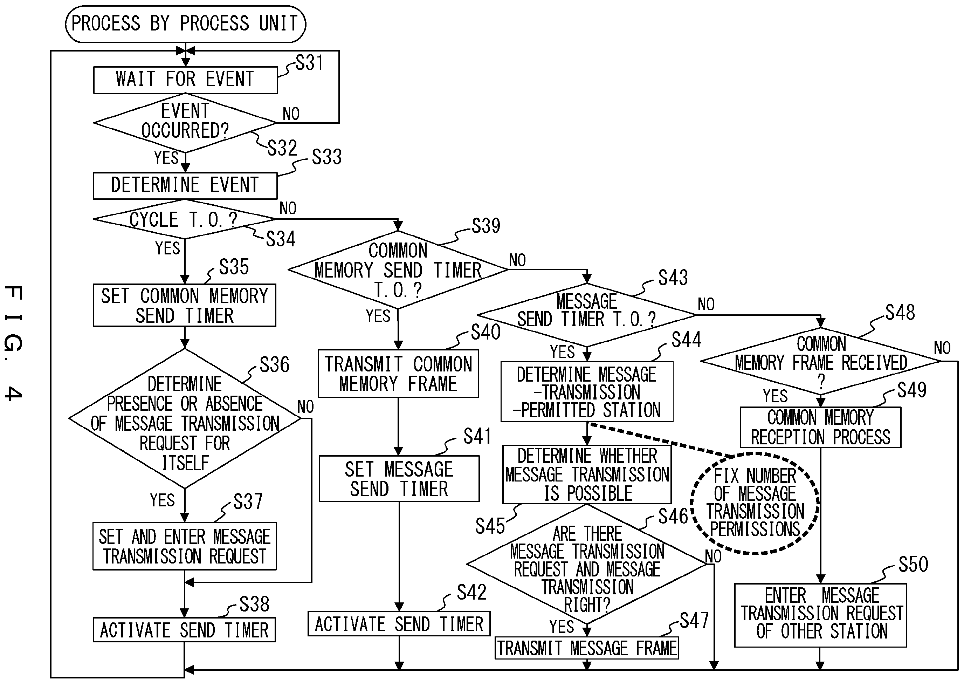

FIG. 4 is a flowchart illustrating a process performed by the process unit 12 of the node 10.

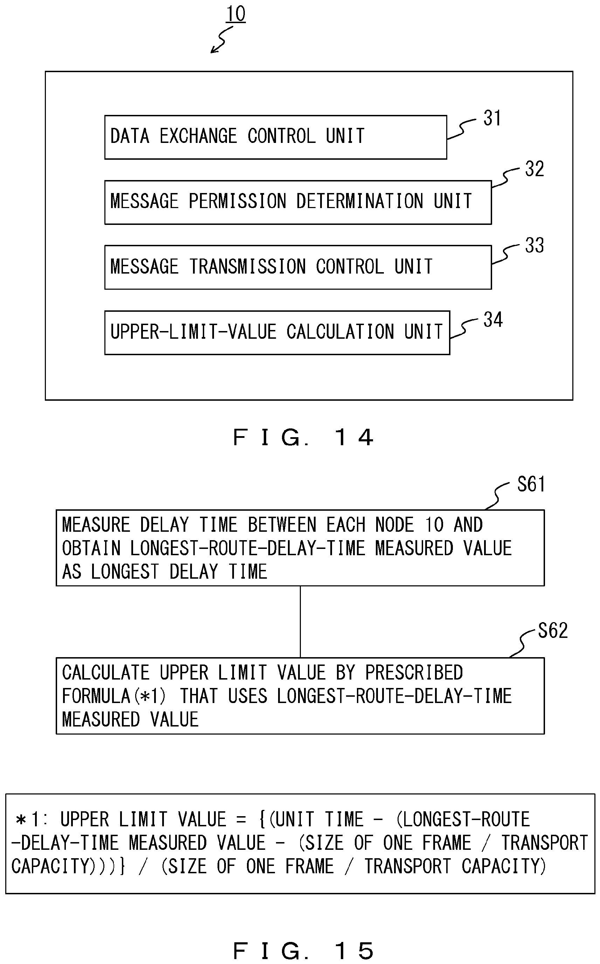

Note that the process unit 12 includes an arithmetic processor such as a CPU/MPU (not illustrated) and a storage unit such as a memory (not illustrated), and the storage unit stores a prescribed application program in advance. The arithmetic processor executes the application program, and thereby for example the processes illustrated in FIG. 4 and FIG. 15 are performed so that the process functions illustrated in FIG. 14 are implemented.

While the conventional techniques have made a master station determine a transmission-right-allotted station for message transmission, each of all the nodes 10 performs the process illustrated in FIG. 4 so that each of all the nodes 10 performs the allotment determination of transmission rights (number of the transmission permissions) in the present example. Whether message transmission is permitted and the number of the allotments of the station are determined on the basis of the determination.

As described above, each station actively determines whether message transmission is permitted, the number of the allotments, etc., and thus transmission rights are not granted in the form of token frame in the present example. When a station is permitted to transmit message, the station transmits it at the start of the message transport band without waiting for a token. This eliminates the need to distinguish between a master station and a slave station in the present example.

The process illustrated in FIG. 4 is performed on an as-needed basis, and the process is basically in an event-waiting state (step S31), and each time an event occurs (YES in step S32), a process is performed in accordance with the result of the determination of the content of the event (step S33).

Specifically, when the event that has occurred is the expiration (cycle T.O.) of the cycle timer 13 (YES in step S34), the processes in step S35 through step S38 are performed.

In other words, a prescribed set value is basically set for the send timer 14 (step S35) so as to activate the send timer 14 (step S38), but when a station checks the presence or absence of a message-transmission request of itself before the activation and there is a message-transmission request (YES in step S36), the number of the message-transmission requests (which will also be referred to simply as the number of the requests hereinafter) is set and entered (step S37). Thereafter, the send timer is activated (step S38). Note that "set" refers to storing the information in a common memory frame, and "enter" refers to storing the information in an "entry table for managing transmission rights", and the table, which is not illustrated, will be referred to as an entry table hereinafter.

When common memory frames to which the number of the requests has been added through the process in step S40 (which will be described later) are transmitted, the common memory frames are delivered to all the other nodes 10 through the relaying process performed by the relay device 20, and thereby all the other nodes will receive the number of the message-transmission requests. The delivered number of the message-transmission requests is stored in the above "entry table" of each node 10. Each node 10 performs the process in step S44, which will be described later, on the basis of the number of the message-transmission requests of each station stored in the above "entry table" of itself.

Because of the above, a value set for the send timer 14 in step S35 is different from those set for all the other nodes 10 similarly to the earlier applications so that all the nodes 10 transmit common memory frames at different timings in the present example; however the scope of the present invention is not limited to this example. The present invention is related to message transmission, and any method can be employed for transmitting a common memory frame.

When the event that has occurred is the expiration of the send timer 14 (send T.O.) (YES in step S39), the station transmits its data (common memory frame) (step S40). In this process, the station delivers its data (a message-transmission request may be added in some cases) to the driver 11. Thereby, as described above, the driver 11 will receive data and a transmission request of step S11 and will transmit that data in step S12. The data is addressed to all the stations (broadcast), and the relay device 20 to which the station is connected will relay/forward the data.

Further, a prescribed set value is set for the message send timer 15 (step S41) and activates it (step S42). In this process, the processes in step S41 and step S42 may be performed together with the processes in step S35 and step S38. Any method may be employed for a configuration in which the message send timers 15 expire in all the nodes 10. In particular, because the cycle timers of all the nodes 10 are synchronized by the synchronization method of the above earlier applications, it is easy to synchronize the start timings of the MSB bands of all the nodes 10 by referring to it.

When an event in which the message send timer 15 expires occurs after the above activation, the determination in step S43, which will be described later, becomes YES. As described above, the MSB bands start at the same timing in all the nodes 10, and a node 10 that is permitted to perform transmission immediately transmits its first message. It need not be mentioned that a node permitted to transmit a plurality of messages will also transmit the second or subsequent messages.

When an event in which the send timer 14 activated in step S38 expires, step S39 becomes YES.

Also, when an event that has occurred is the expiration of the message send timer 15 (send T.O.) (YES in step S43), the processes in step S44 through step S47 are executed.

Specifically, a message-transmission-permitted station determination is first performed (step S44). This process is also a process of determining the number of the permissions to transmit message for each node 10, and thereby whether message transmission is permitted and the number of the permissions to transmit message for itself are determined (step S45).

On the basis of the determination in step S45, when a station has a message-transmission request and is permitted to transmit message (YES in step S46), it transmits message frames in an amount corresponding to the number of the permissions to transmit message for itself (step S47).

When the station does not have a message-transmission request from the beginning, it is not permitted to transmit message, or in other cases (NO in step S46), no messages are transmitted.

When an event that has occurred is the reception of a common memory frame (YES in step S48), the data of that common memory frame is stored in the corresponding area of the common memory (not illustrated) (step S49). Note that a frame transmitted in the process in step S40 is referred to as a common memory frame. When the driver 11 receives a common memory frame transmitted, in the process in step S40, from an arbitrary different station and the driver 11 delivers the common memory frame to the process unit 12 in step S25 in the process illustrated in FIG. 2(b), the determination in step S48 becomes YES.

Also, when the received common memory frame includes the number of the message-transmission requests stored in step S37 by the transmission-source node 10 of the common memory frame, it is considered that there was a message-transmission request and the number of the requests is additionally stored in the above "entry table" together with the ID of the transmission-source node 10 etc (step S50). This "entry table" will be referred to in the process of step S44. Of course, each frame includes the ID (identification information) of the transmission source.

Although not illustrated, a configuration may be employed in which the driver 11, when receiving a message frame, delivers the received message to the process unit 12, and the process unit 12 takes in the message frame when the destination of the message frame is the station to which it belongs and discards the message frame when the destination of the message frame is not the station to which it belongs.

As described above, each node 10 (each station) that has received a common memory frame receives a message-transmission request of the transmission-source station in the present example. In other words, each station receives a message-transmission request (the number of the requests) from each station (each node 10) participating in the network, and each station independently determines a permitted station and the number of the allotments (number of the permissions) of message (step S44). Even when the nodes independently perform determination, they obtain the same determination result for the same data because they use the same determination algorithm. In other words, when all the common memory frames are transported from the stations, all the stations will obtain the same allotment result (determination result). Each station determines whether the station is permitted to transmit message and the number of the allotments on the basis of the result of the determination of message transmission right allotment. When message transmission is permitted, message frames are transmitted simultaneously on the basis of the message send timers 15 that are synchronized across all the stations.

A known arbitrary method may be used for determining a permitted station and the number of the allotments (number of the permissions) of message in step S44, and for example equal allotment or priority order allotment such as "weighted round robin" etc., a combination of them, or other arbitrary existing techniques may be employed. Methods for the determination are not limited, and any method may be employed including a known technique, a combination of known techniques, etc.

The process, performed in step S44, of determining a permitted station and the number of the allotments (number of the permissions) of message may be considered to be a process that has been performed by a master station in the conventional techniques and is performed by each of all the nodes 10 in the present invention, and the total value of the number of the allotments (number of the transmission permissions) has to be kept below a prescribed upper limit value although this will not be explained in more detail.

As described above, the entire system has an upper limit on the number of the message transmissions in an MSB band. When messages are transmitted in a number exceeding this upper limit value, the transmission and reception of not all the messages are completed in the MSB band. The upper limit value is not a fixed value, but a value that varies in accordance with the configuration, performance, etc. of the system.

Explanations will be given for a method of calculating an upper limit value such as this.

In the present example, the upper limit value (the number of the message transmissions possible per unit time) is calculated by for example formula (1) below.

$$\begin{aligned}
\text{Upper limit value} = \{&\text{unit time} - (\text{number of the stages of}\\
&\text{the relay device} \times \text{relay device delay}) - ((\text{number of stages of}\\
&\text{the relay device} + 1) \times \text{frame transmission delay})\} / \{(\text{size of}\\
&\text{one frame} / \text{transport capacity}) + \alpha\} \quad\quad \text{formula (1)}
\end{aligned}$$

The upper limit value is obtained by discarding digits to the right of the decimal point of a value obtained through formula (1).

The upper limit value thus obtained may be considered to be the maximum number of the messages (the number of the messages that can be transmitted by the entire system) that can be transmitted completely within a period of time obtained by subtracting the delay time occurring when the messages pass through the relay device 20, the delay time related to the transport, etc. from the unit time (length of the MSB band). The case where only one station transmits as many messages as the number specified by the upper limit value is considered to be a case where "time taken before messages are transmitted completely" is the longest (except a case where the relay device 20 has a single stage).

Also, an increase in the number of the stages of the relay device increases relay device delays and frame transport delays, and thus decreases the number of the frames that can be transmitted. Formula (1) indicates that the greater the number of the stages of the relay device is, the lower the upper limit value is.

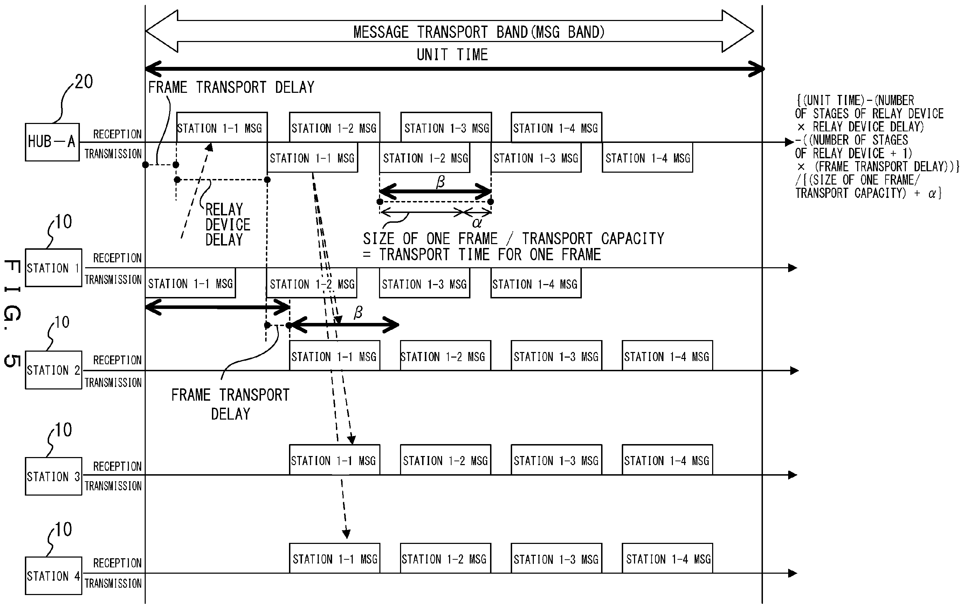

The items in formula (1) will be explained below by referring to the example illustrated in FIG. 5. Note that FIG. 5 illustrates an example of a message transmission-reception operation in an MSB band for a relay device having a single stage (as illustrated in FIG. 1).

- Unit time: the length of an MSB transport band
- The number of the stages of the relay device: the number of the relay devices 20
- Relay device delay: time taken by a relaying process in the relay device 20
  In this example, while a time taken for the relay device 20 employing a store and forward system to complete the reception of one frame is used an example (FIG. 5), the scope of the present invention is not limited to this example. When, for example, the relay device 20 employs a cut-through system, forwarding can be started even during the reception of one frame, and thus the value of the relay device delay (shorter than in the example of FIG. 5) is set in response to the fact. In any case, while the system-developing personnel etc. can set the value appropriately, it is desirable that the set value be selected for the worst case (for the relay device 20 having the largest delay).
- Frame transport delay: time taken to transport data between the node 10 and the relay device 20: as illustrated in FIG. 5, a delay occurs for example between the start of the frame transmission in station 1 and the start of the frame reception in the relay device 20

Note that when variations etc. in the lengths of transmission paths between the nodes 10 and the relay device 20 cause variations in actual frame transmission delays, the system-developing personnel etc. sets a value for the worst case (the longest) as a fixed value in advance.

Transport capacity: transport capacity on the transport paths between the nodes 10 and the relay device 20: while the capacity is for example 1 Gbit/sec or other values in the present example, the scope of the present invention is not limited to this example.

$\alpha$: gaps between frames: time taken to become ready to start the transmission of a message frame after the completion of the transmission of an immediately previous message frame as illustrated in FIG. 5 for example

In formula (1) above, (size of one frame / transport capacity) represents a transport time for one frame as illustrated in FIG. 5. Also, $\alpha$ is a time between the termination of the transmission of one frame and the start of the transmission of the next frame. In other words, time $\beta$, which is a time taken to transmit one frame, can substantially be considered to be equal to "(size of one frame / transport capacity) + $\alpha$".

Formula (1) above means dividing, by time $\beta$ above, a time obtained by subtracting [time taken for the relay device 20 to start the forwarding of a first message frame ("frame transport delay + relay device delay" related to "station 1-1MSG" in FIG. 5 when the relay device has a single stage) and frame transport delay related to "station 1-1MSG" forwarded by the relay device 20] from the unit time.

For example, the system-developing personnel etc. may use formula (1) to calculate an upper limit value in advance so as to set/store the upper limit value in all the nodes 10. However, the number of the relay devices 20 may vary (the number of the stages of the relay device may vary or, in many cases, increase) during the operation. Thereby, formula (1) and the values of the above items are stored (set by the user in an arbitrarily manner in advance) in at least one of the nodes 10. When the number of the relay devices 20 changes during the operation, the user etc. sets a new number of the stages of the relay device in all the nodes 10. Thereby, the above arbitrary node 10 calculates and stores a new upper limit value by using the values of the above items other than "the number of the stages of the relay device", the value of the new "number of the stages of the relay device", and formula (1). The arbitrary node 10 also reports the new upper limit value to the other nodes 10 to make them store the value.

Thereafter, each node 10 uses the new upper limit value to perform a process of determining the message-transmission-permitted station and the number of the permissions.

As described above, each node 10 may have a function of calculating an upper limit value at an arbitrary timing during the operation.

In the example illustrated in FIG. 5, the upper limit value is assumed to be "4".

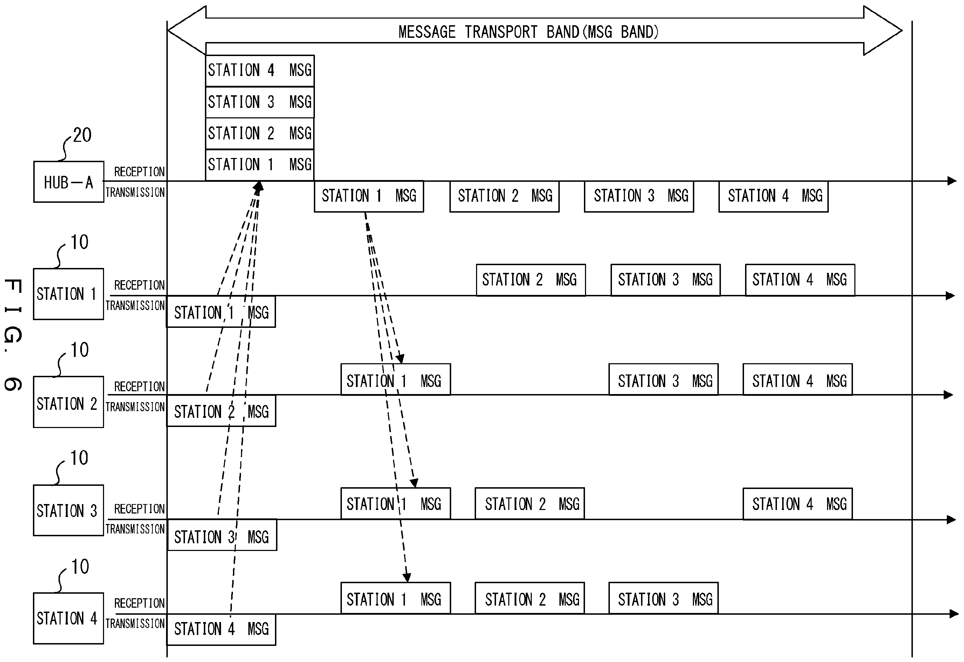

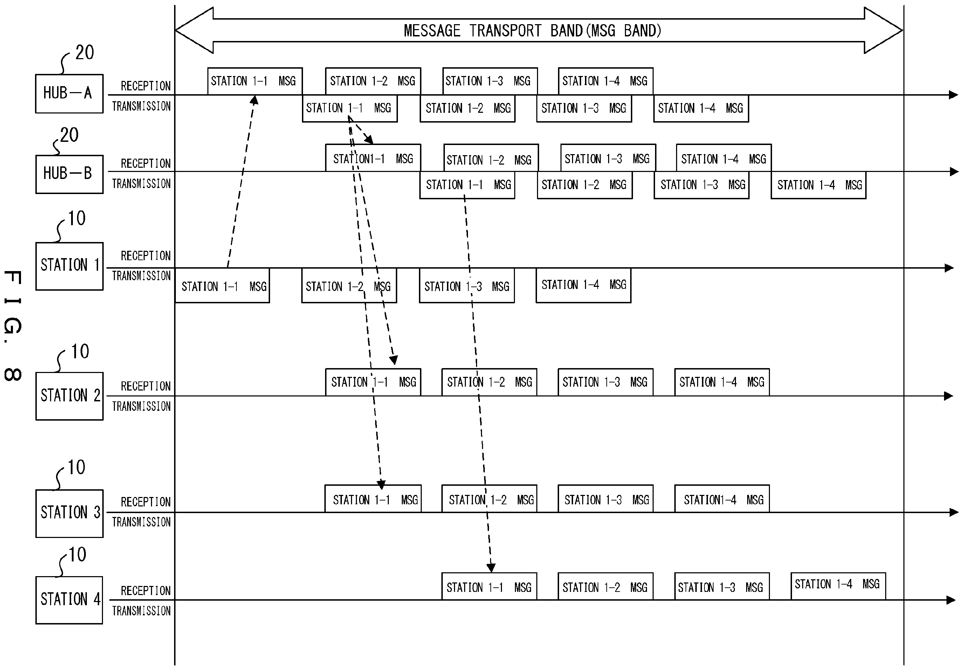

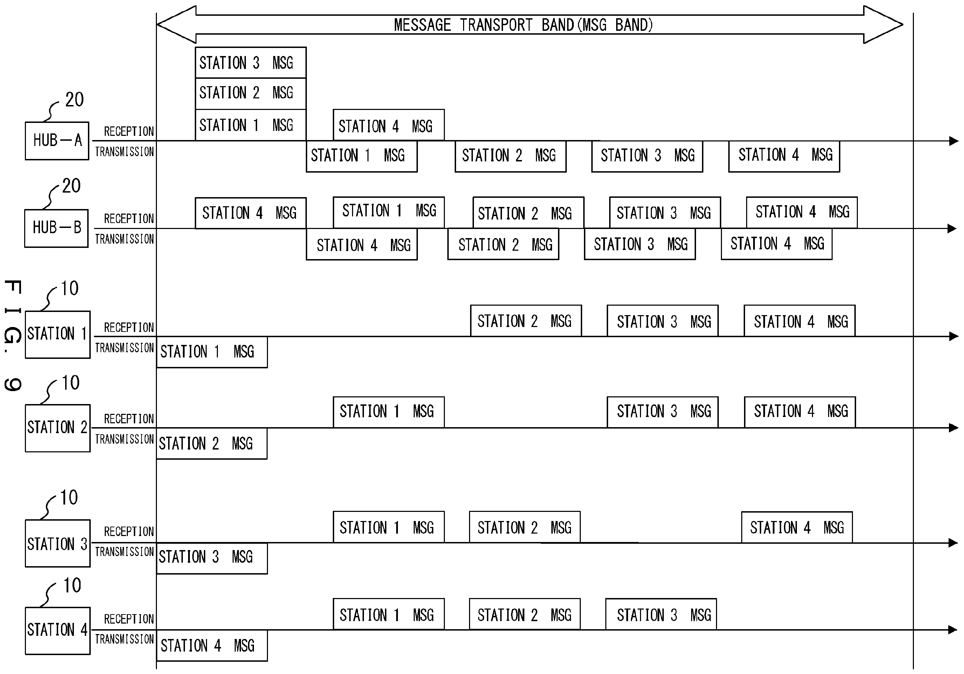

FIG. 5 and FIG. 6 illustrate message transmission-reception operations for a network configuration with a single relaying stage (with one relay device 20) as illustrated in for example FIG. 1. In this example, all the messages are addressed to all the other nodes 10. Note that FIG. 5 and FIG. 6 illustrate only the operations in an MSB band, and omit those in other bands such as a TS band. This applies also to FIG. 8 and FIG. 9, which will be described later.

In FIG. 5, one node 10 transmits (broadcasts) as many (i.e. four) messages as specified by the upper limit value, the messages being addressed to all the other nodes 10, and all four messages have been transmitted and received completely in the MSB band.

FIG. 6 illustrates an operation in which all four nodes each transmit one message, and also transmits (broadcasts) a message addressed to all the other nodes 10 in the same network configuration as that illustrated in FIG. 5.

In this case as well, all four messages have been transmitted and received completely in an MSB band as described in the figure.

When the relay device has a single stage, a case where four nodes 10 transmit all four messages takes the same total time as taken by a case where each of the four nodes 10 transmits one message.

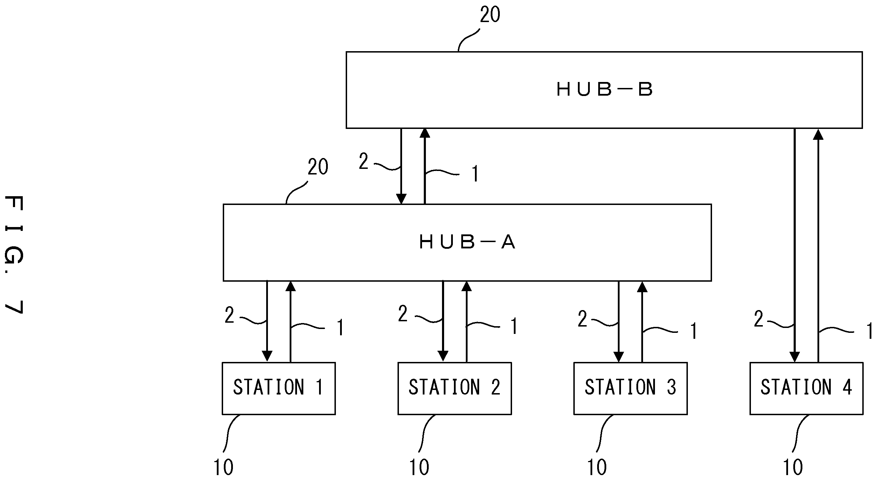

When the relay device has two stages, the two cases take different times. This will be explained below by referring to FIG. 7, FIG. 8, and FIG. 9.

FIG. 7 illustrates a network configuration example where the relay device has two stages.

In this example, two relay devices 20 (HUB-A and HUB-B) are connected to each other, three nodes 10, i.e., station 1, station 2, and station 3 are connected to HUB-A, and only station 4 is connected to HUB-B.

FIG. 8 and FIG. 9 illustrate examples of message transmission-reception operations in a network configuration with two stages illustrated in FIG. 7.

For a two-stage configuration, similarly to the above single-stage configuration, a case where one station (station 1 in this example) transmits four messages (FIG. 8) and a case where each of the four stations transmits one message (i.e., four messages in total) (FIG. 9) are illustrated on an assumption that the upper limit value is "4" and all the messages are addressed to all the other nodes. As a comparison between FIG. 8 and FIG. 9 indicates, a case where one station transmits all four messages takes a longer time before the completion of the transmission and reception of all the messages.

As illustrated in FIG. 8, station 1 sequentially transmits four messages, and HUB-A receives the four messages so as to sequentially start forwarding the messages for which the reception has been completed. The messages, which are addressed to all the nodes (station 2, station 3, station 4) other than the transmission source, are to be forwarded to HUB-B serving as a relay device related to station 2, station 3, and station 4, and "station 1-1MSG" is forwarded to station 2, station 3, and HUB-B as the first message as illustrated in the figure. This first message "station 1-1MSG" is forwarded by HUB-B to station 4.

From the above, a time taken before starting the reception of the first message "station 1-1MSG" after the start of the MSB band for station 2 and station 3 satisfies "frame transport delay from relay device delay + station 1 to HUB-A + frame transport delay from HUB-A to station 2 and station 3" = "relay device delay + ($2 \times$ frame transport delay)".

For station 4, a time taken before station 4 starts the reception of the first message "station 1-1MSG" after the start of the MSB band satisfies "frame transport delay from relay device delay + station 1 to HUB-A + frame transport delay from HUB-A to HUB-B + frame transport delay from HUB-B to station 4" = "relay device delay + ($3 \times$ frame transport delay)".

By contrast, a time other than a time taken before the termination of the reception after the start of the reception in formula (1) above for a relay device with two stages is equal to "relay device delay + ($3 \times$ frame transport delay)". Accordingly, for station 4 as well, which takes the longest time in the present example, all the messages can be received completely in the MSB band.

By contrast, all the stations (station 1, station 2, station 3, and station 4) transmit messages at the same time as the start of the MSB band. Thereby, HUB-A receives the messages (three in total) from station 1, station 2, and station 3, and HUB-B receives the message from station 4.

Upon the completion of the reception of the messages, HUB-A forwards a message from among the three messages, e.g., the message "station 1 MSG" from station 1. The message, addressed to all the stations except the transmission source, is to be forwarded to station 2, station 3, and HUB-B as illustrated in the figure. At the same timing, HUB-B is to forward the message from station 4 to HUB-A.

Thereby, upon the completion of the forwarding of "station 1 MSG", HUB-A sequentially forwards the messages received from station 2, station 3, and station 4. The messages from station 2 and station 3 are forwarded to HUB-B (to forward them to station 4), but the message from station 4 is not forwarded to HUB-B because it is not forwarded to the transmission source.

In the example illustrated in FIG. 9, while a time taken before station 4 starts receiving the first message after the start of the MSB band is equal to that in FIG. 8, station 4 only has to receive the three messages completely (does not have to receive "station 4 MSG" transmitted from itself), and accordingly station 4 completes the message transmission and reception earlier by a time for one message than in the case of FIG. 8.

The method of calculating the upper limit value (the number of the message transmissions possible per unit time) by using formula (1) is just an example, and the scope of the present invention is not limited to this example. Hereinafter, other methods of the calculation will be explained. It is assumed herein that the method of calculating an upper limit value by using formula (1) will be referred to as "first upper-limit-value calculation method" and the method of calculating an upper limit value by using formula (2), which will be described later, will be referred to as "second upper-limit-value calculation method". It is also assumed in the following explanation that an arbitrary node selected in advance from among the plurality of nodes 10 constituting the system will be referred to as a master station and the other nodes 10 will be referred to as slave stations. However, this master station is different from a master station that manages for example message transmission rights etc. As described above, the present invention does not require a master station that manages message transmission rights etc. The master station according to the present explanation can simply be considered to be a station that performs, in a leading position, a process of measuring a communication time (delay time) between the nodes 10, which will be described later.

In the "first upper-limit-value calculation method", "the number of the stages of the relay device" etc. that is set in advance has to be used as explained for formula (1). Parameters such as "the number of the message transmissions possible per unit time" calculated by using "the number of the stages of the relay device" etc. also have to be set in all stations participating in the network.

The "number of the stages of the relay device" varies depending upon the system configuration, e.g., varies in response to the expansion or contraction in the plant facilities. This naturally leads to the need to set a new "number of the stages of the relay device" etc. in response to a change in the system configuration, again obtain a parameter of the number of the message transmissions possible per unit time by using formula (1), and again set that parameter in all stations participating in the network. This setting operation may increase the cost of running the plant due to the occurrence of an engineering cost for the setting, abnormal halt of the system caused by a setting mistake, etc.

By contrast, in "second upper-limit-value calculation method", a communication time (delay time) between the nodes 10 is measured automatically so that the "upper limit value" is calculated on the basis of the measured value, and accordingly no setting costs or setting mistakes occur. This can prevent an increase in the cost of running the plant.

In the "second upper-limit-value calculation method", the master station measures the communication times (delay times) between itself and all the slave stations, and identifies the slave station having the longest route (longest delay time) from the master on the basis of the measured results.

The master station next reports to the identified slave station (the station having the longest path from itself) a request to measure delay times with other stations (longest-delay-time measurement request).

The identified slave station that has received this longest-delay-time measurement request measures the communication times (delay times) between the slave station itself and all the other slave stations, and reports the longest delay time among all the measured delay times to the master station as the "measured value of the longest-route delay time" for the entire system. Note that "all the measured delay times" includes the delay time between the master station and the identified slave station.

Both the master station and the identified slave station may use an arbitrary known method such as the method described in WO2013/121568 to measure the delay time between itself and a different station; however the scope of the present invention is not limited to this example. In an example of a measurement performed by a master station by using the method of measuring a delay time described in WO2013/121568, the master station transmits a particular packet for measuring a delay time to an arbitrary slave station, and the arbitrary slave station immediately returns a return packet when the received packet is the above particular packet.

By receiving this return packet, the master station can measure a time that has elapsed between the transmission of the particular packet and the reception of the return packet. The measured time may be treated as a time taken for a packet to make a round-trip between the master station and the arbitrary slave station, and in other words is the measured value of the communication time of the round-trip between the two stations. By dividing the measured value by two (the time half the measured value) is the communication time between the master station and the arbitrary slave station (delay time).

When receiving the reported "measured value of the longest-route delay time", the master station uses formula (2) below to calculate the above upper limit value (the number of the message transmissions possible per unit time).

$$\text{Upper limit value} = \{(\text{unit time} - (\text{longest-route-delay-time}$$
$$\text{measured value} - (\text{size of one frame} / \text{transport capacity})))\}$$
$$/ (\text{size of one frame} / \text{transport capacity}) \quad \text{formula (2)}$$

The master station reports an upper limit value calculated by using formula (2) to all the slave stations.

Each slave station holds the reported upper limit value. Thereafter, it uses the upper limit value to perform the above operations (determination of the message permitted station and the number of the permissions). Naturally, this applies to the master station.

Each time an arbitrary station pulls out of the network or rejoins the network, a new upper limit value (the number of the message transmissions possible perm unit time) is calculated by using the above example, and message frames are transmitted and received by using this upper limit value.

As described above, the "second upper-limit-value calculation method" makes it possible to automatically and dynamically calculate the number of the message transmissions possible per unit time without changing a setting in response to a change in the system configuration. This also makes it possible to perform message communications with a message transmission possible upper limit value appropriate to the new system configuration.

Hereinafter, the above "second upper-limit-value calculation method" will be explained in more detail by using a specific example.

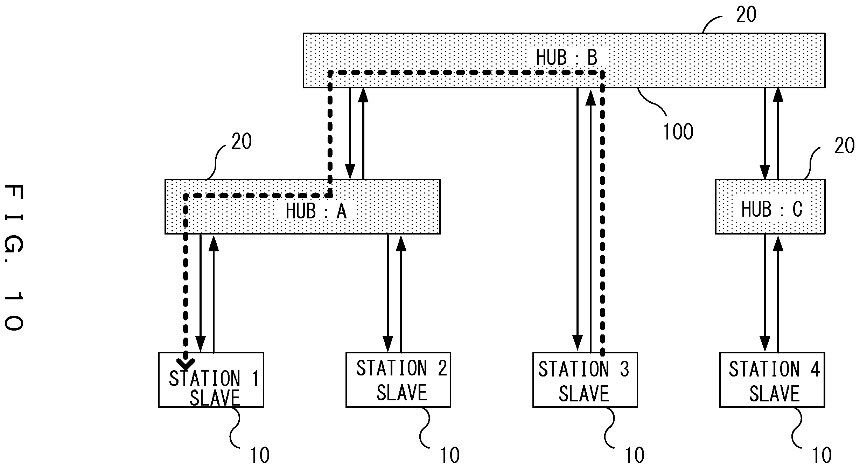

The explanations will be given for an exemplary case where the network configuration has shifted from a configuration with a relay device having one or two stages as illustrated in FIG. 1(a) and FIG. 7 to a configuration with a relay device having three stages as illustrated in FIG. 10.

The configuration illustrated in FIG. 10 includes four nodes 10, i.e., station 1, station 2, station 3, and station 4, among which station 3 serves as the master station and the others serve as slave stations. As described above, the master station in the present example is a station that performs a process related to the above "second upper-limit-value calculation method" in a leading position, and is different from a master station that manages message transmission rights.

The configuration also includes three relay devices 20 (HUB-A, HUB-B, and HUB-C). HUB-B has HUB-A, HUB-C, and station 3 connected to itself. HUB-A has station 1 and station 2 connected to itself. HUB-C has station 4 connected to itself.

Note that the node 10 and the relay device 20 may have configurations/functions basically similar to those in FIG. 1(a), FIG. 1(b), and FIG. 7, and thus like members are denoted by like symbols. However, each node 10 in this example performs a process for calculating an upper limit value by using a "second upper-limit-value calculation method".

The configuration illustrated in FIG. 10 requires a communication between station 1 and station 4 to be relayed by all of the three relay devices 20 (HUB-A, HUB-B, and HUB-C), and thus the route between station 1 and station 4 is the longest.

When the process of the above "second upper-limit-value calculation method" is to be performed in the configuration illustrated in FIG. 10, station 3, serving as the master station, first measures the communication times (delay times) between itself and all the other slave stations, and identifies the slave station that is farthest (that has the longest delay time) from the master station. It is assumed in this example that station 1 has the longest delay time (the route represented by the arrow of dotted line is the longest in the figure). In other words, station 1 is the above identified station. Thereby, station 3 reports the above longest-delay-time measurement request to station 1.

Station 1, receiving this report, performs a process of measuring the communication time (delay time) between itself and each of all the other slave stations.

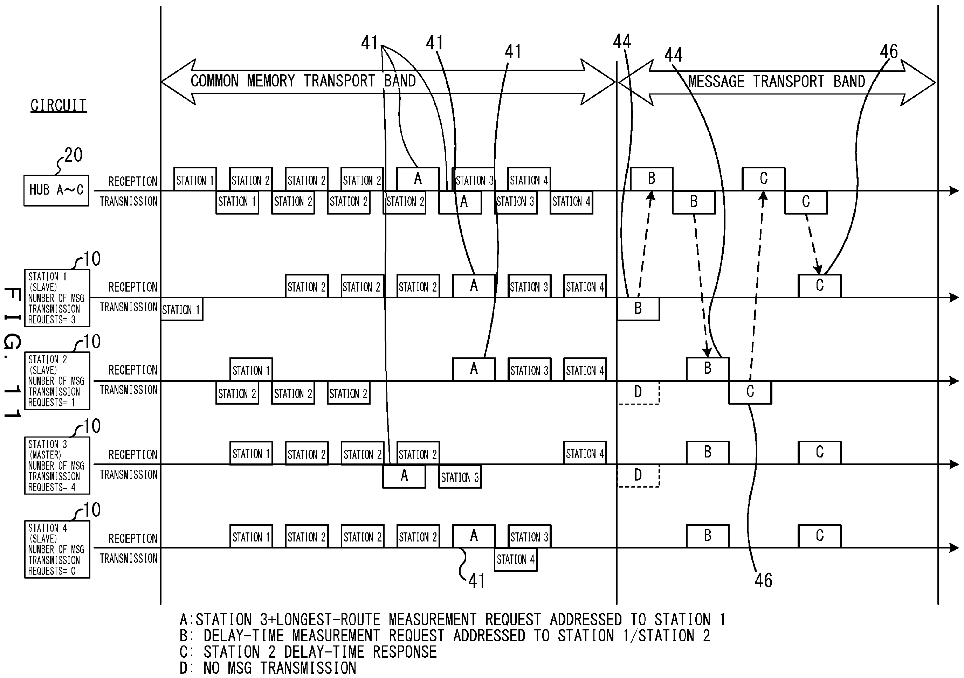

FIG. 11 illustrates operation examples of station 1 and station 3 in a specific example such as this.

FIG. 11 illustrates an example of an operation that is performed after station 3 (master station) determines station 1 to be the above identified station.

In the above specific example, station 3 (master station) first adds a code representing the above longest-delay-time measurement request and the station number of station 1 to a common memory frame 41 containing the data of station 3 and broadcasts the common memory frame 41 in the common memory transport band as illustrated in FIG. 11.

This common memory frame 41 is relayed by each relay device 20, and is delivered to the slave stations 1, 2, and 4. While two-stage relaying is performed (for example two-stage relaying is performed by HUB-B and HUB-C for station 4), it is omitted and is illustrated as one-stage relaying in FIG. 11. Accordingly, the delay time by the relay device 20 in FIG. 11 is different from the actual time (in reality, a delay time matching the two-stage relaying is taken).

The slave stations 1, 2, and 4 refer to the station number and the code representing the longest-delay-time measurement request that have been added to the received common memory frame 41, and determine whether the frame is a longest-delay-time measurement request to the stations.

Only a slave station that has determined the frame to be a longest-delay-time measurement request addressed to itself (only station 1 in this example) measures the communication times (delay times) between itself and all the other slave stations. This measurement process is performed in the message transport band.

The slave stations meanwhile determine that there was a measurement request to a different station when the received common memory frame 41 includes a code representing a longest-delay-time measurement request and the station number is different from the numbers of themselves. In such a case, the message transport halts temporarily, and a mode for delay time measurement starts. In this mode, a slave station, when received a packet addressed to itself in the message transport band, performs a process of returning a packet immediately. Also, regular message transport processes are not performed during this mode as described above.

A configuration may also be employed in which the master station also temporarily halts the message transport after it transmits the common memory frame 41 (including longest-delay-time measurement request). This prevents a measurement error from occurring due to a delay time measurement and message transport occurring at the same time.

Note that FIG. 11 only illustrates part of the operations for this measurement. In other words, while FIG. 11 only illustrates operations for measuring the delay time between station 1 and station 2, similar operations are performed for measuring the delay time between station 1 and station 4 in the message band of a later communication cycle.

In the example illustrated in FIG. 11, station 1 broadcasts, in the message band, a delay time measurement packet 44 to which the station number of station 2 is added. The relay devices 20 relay this packet 44 and all the nodes 10 receive this packet 44, whereas only station 2 returns a return packet 46 immediately when receiving the packet 44.

The relay devices 20 relay this return packet 46, and station 1, station 3, and station 4 receive the packet, whereas the stations other than station 1 discard the packet. Station 1 measures the time that elapsed between the transmission of the delay time measurement packet 44 and the reception of the return packet 46. The time half this measured time is the measured value of the delay time between station 1 and station 2.

Thereafter, station 1 this time broadcasts the delay time measurement packet 44 to which the station number of station 4 is added in the message transport band of the next communication cycle, although this is not illustrated FIG. 11. Station 4 immediately returns the return packet 46 upon the reception of the packet 44. Thereby, station 1 measures the delay time between station 1 and station 4. At that moment, station 1 in this example determines that the process of measuring the delay times between itself and all the other slave stations has been completed, and extracts the longest delay time from among the obtained delay times.

It is assumed in this example that the above "obtained delay times" include the delay time between the master station and station 1. In such a case, it is naturally necessary that the common memory frame 41 from the master station also include the delay time between the master station and station 1. In this example, the above extracted "longest delay time" is the longest-route-delay-time measured value.

However, scope of the present invention is not limited to this example, and when for example the above "obtained delay times" does not include the delay time between master station and station 1, the extracted "longest delay time" is reported to the master station, and the longer time between "the longest delay time" and the delay time between the master station and station 1 is treated as the longest-route-delay-time measured value.

However, explanations will herein be given by using an example in which "the longest delay time" is the longest-route-delay-time measured value. Accordingly, the longest-route-delay-time measured value is obtained in station 1, and station 1 thereafter reports the obtained longest-route-delay-time measured value to the master station for example as described later.

Note that all the stations are transmitting and receiving common memory transport frames in the common memory transport band in each communication cycle during the above delay time measuring process as well (the regular message transmission/reception process is halted).

It is possible to identify the route that takes the longest time for communications in the entire configuration of the system and to obtain the delay time thereof (longest-route-delay-time measured value).

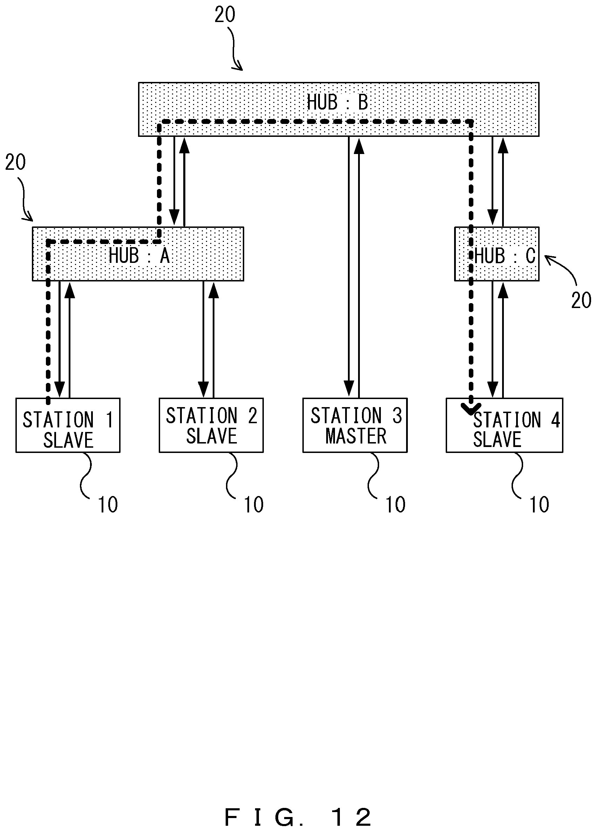

In the example of the system configuration illustrated in FIG. 10, the above "route that takes the longest time for communications in the entire configuration of the system (the longest route)" is the route between station 1 and station 4, which is represented by the arrow of dotted line in FIG. 12, and the measured value of the delay time between station 1 and station 4 is the greatest measured value among all the measured values of delay times.

Thereafter, in the common memory transport band in the next communication cycle, station 1 reports the above longest-route-delay-time measured value and a "code indicating the completion of measurement" to the master station (station 3) by including them in a common memory transport frame of itself.

The master station (station 3) checks each common memory transport frame received in the common memory transport band so as to check the presence or absence of a "code indicating the completion of measurement" in a common memory transport frame from the identified station (station 1), and obtains the longest-route-delay-time measured value contained in that transport frame when such a code exists.

The master station then uses the obtained longest-route-delay-time measured value to obtain the upper limit (upper limit value of the number of the message transmissions possible per unit time) by formula (2) above, and reports the value to all stations. The upper limit value is reported through for example the transmission of a common memory transport frame of the master station including the value in the common memory transport band. Each station updates the upper limit value belonging to itself on the basis of the reported upper limit value.

After calculating the upper limit value and reporting it to each station as described above, master station (station 3) deletes the "code representing the longest-delay-time measurement request" in the common memory transport frame of itself.

Thereby, each slave station, when determining that there is no "code representing the longest-delay-time measurement request" in the common memory transport frame transmitted from the master station, cancels the halt of the message transmission so as to return to a state in which it can transmit message. Naturally, each station thereafter uses the reported upper limit value to perform message communications.

While the master station calculates the upper limit value to report it to each station in unified management in the above example, the scope of the present invention is not limited to this example. For example, the identified station (station 1) may report the longest-route-delay-time measured value to all stations so that each of all the stations uses the longest-route-delay-time measured value and formula (2) to calculate the upper limit value.

The following will further explain formulas (1) and (2) above. As described above, formula (1) is as below:

$$\text{Upper limit value} = \{\text{unit time} - (\text{number of the stages of the relay device} \times \text{relay device delay}) - ((\text{number of stages of relay device} + 1) \times \text{frame transport delay})\} / \{(\text{size of one frame} / \text{transport capacity}) + \alpha\} \quad \text{formula (1)}.$$

As described above, formula (2) is as below:

$$\text{Upper limit value} = \{(\text{unit time} - (\text{longest-route-delay-time measured value} - (\text{size of one frame} / \text{transport capacity})))\} / (\text{size of one frame} / \text{transport capacity}) \quad \text{formula (2)}.$$

The concept common to formulas (1) and (2) can be expressed by formula (3) below:

$$\text{Upper limit value} = ((\text{unit time} - (\text{longest-route delay time})) / (\text{size of one frame} / \text{transport capacity}) \quad \text{formula (3)}.$$

"(Number of stages of relay device $\times$ relay device delay) + ((number of stages of relay device + 1) $\times$ frame transport delay)" is equivalent to "longest-route delay time" in formula (3) above.

" (Longest-route-delay-time measured value - (size of one frame / transport capacity)" in formula (2) above is equivalent to "longest-route delay time" in formula (3) above.

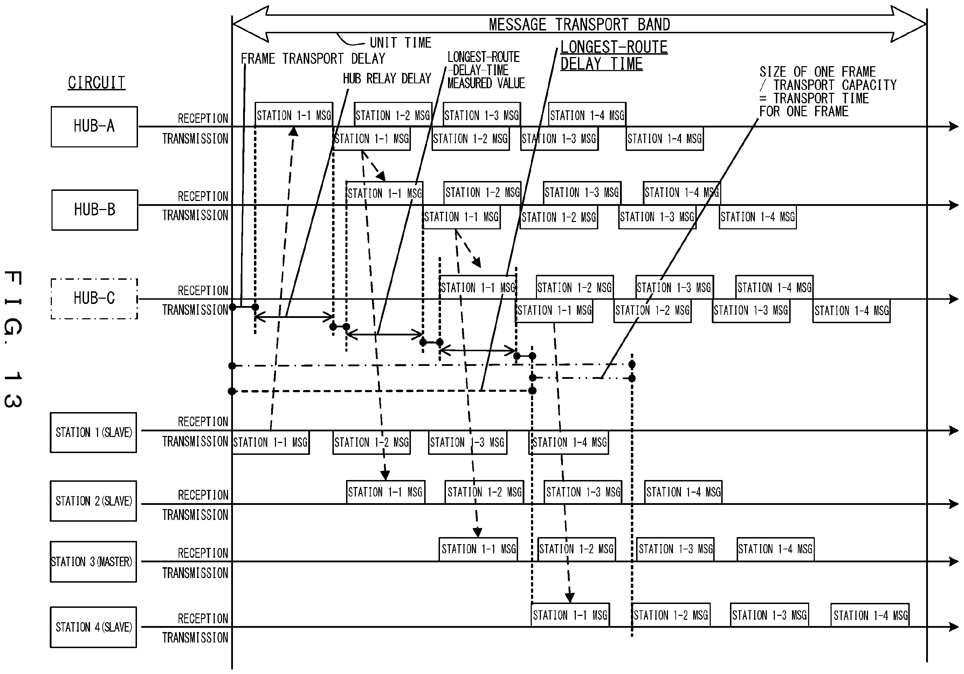

FIG. 13 explains the above formulas (particularly formula (2)).

FIG. 13 illustrates the transmission and reception of messages when only station 1 transmits four messages in the message transport band of an arbitrary communication cycle in the system configuration of FIG. 10. The length of the message transport band is the unit time.

The figure includes the rectangles representing messages denoted by "station 1-1 MSG", "station 1-2 MSG", "station 1-3 MSG", and "station 1-4 MSG" for distinguishing between the four messages. As illustrated in the figure, station 1 first transmits message "station 1-1 MSG", and sequentially transmits messages "station 1-2 MSG", "station 1-3 MSG", and "station 1-4 MSG" in this order.

As described above, the route between station 1 and station 4 is the longest in the system configuration example illustrated in FIG. 10.

" (Lngest-route delay time" in formula (3) is equivalent to a time that elapses between when the transmission-side station starts transmitting a message through the longest route and when the reception-side station starts receiving that message.

In the example illustrated in FIG. 13, the "longest-route delay time" is the time depicted by the thick dotted line, i.e., the time between when station 1 starts transmitting message "station 1-1 MSG" and when station 4 start receiving that message.

In the example illustrated in FIG. 13, the time resulting from subtracting "longest-route delay time" from the unit time is a time that elapses between when station 4 starts receiving all of the above four messages and when it completes the reception of the messages, i.e., "(size of one frame / transport capacity) × 4". In other words, the upper limit value is "4" according to formula (3) in this example.

Meanwhile, the "longest-route-delay-time measured value" in formula (2) is the time depicted by the dashed-dotted line in the example of FIG. 13. In other words, it is the time between when station 1 starts the transmission of message "station 1-1 MSG" and when station 4 completes the reception of that message. This is because a receiving station returns a packet after completing the reception of a packet in measurement of a delay time. In other words, the "longest-route-delay-time measured value" in formula (2) is longer than the "longest-route delay time" in formula (3) by the time (depicted by the two-dot chain line in the figure) taken for the receiving station to start and complete the reception of one message. In formula (2) therefore, the time equivalent to the "longest-route delay time" in formula (3) is obtained by subtracting this period, i.e., by " (longest-route-delay-time measured value) - (size of one frame / transport capacity)".

The master station starts the above process of determining/setting a new upper limit value each time it detects a change in the system configuration (for example each time an arbitrary station pulls out of the network or rejoins the network). When for example the master station determines a station that has failed to receive a frame for a prescribed period of time to have pulled out of the network or receives a frame from a station with a station number that has not existed before so as to determine that station to have newly joined or rejoined the network, the master station starts the process of determining/setting a new upper limit value.

The above "second upper-limit-value calculation method" makes it possible to automatically determine/set an upper limit value (the upper limit of the number of message transmissions per unit time) that is the most appropriate to a new system configuration even when the user does not change the setting in response to the change in the system configuration. It is possible to communicate messages with an upper limit of the number of the message transmissions possible per unit time that is the most appropriate to a new system configuration.

FIG. 14 illustrates a functional configuration of a control network system according to the present example.

The control network system of the present example is a network system in which the plurality of nodes 10 mutually exchange data through one or more relay devices 20 in a first band in each communication cycle, which has a first band and a second band. Examples of the above first band include the above TS band, and examples of the above second band include the above MSB band.

Note that the process unit 12 includes an arithmetic processor such as a CPU/MPU (not illustrated) and a storage unit such as a memory (not illustrated), and the storage unit stores a prescribed application program in advance. The execution of that program by the arithmetic processor implements the various types of the process functions of the node 10 illustrated in for example FIG. 14.

In the illustrated example, the node 10 includes a data exchange control unit 31, a message permission determination unit 32, a message transmission control unit 33, and an upper-limit-value calculation unit 34.

When there is a message-transmission request upon the transmission of an arbitrary data for the mutual exchange of data in the first band, the data exchange control unit 31 adds the request to the data to be transmitted.

The message permission determination unit 32 determines whether the device to which it belongs is permitted to transmit message, on the basis of the message-transmission request obtained through the mutual data exchange in the first band.

The message transmission control unit 33 transmits a message at a prescribed timing in the second band if the device to which it belongs is determined to be permitted to transmit message.

The above prescribed timing is for example the start of the second band.

The message permission determination unit 32 determines for example whether each node 10 is permitted to transmit message, and thereby determines whether the device to which it belongs is permitted to transmit message.

For example, the message permission determination unit 32 of each node 10 uses the same algorithm, and thereby each node 10 obtains the same determination result as to whether message transmission is permitted. Thereby, no problem arises in the message transmission-reception operations of the entire system even when each node 10 independently performs the determination and transmits message in accordance with the determination result of itself.

Further, the data exchange control unit 11 for example adds the number of the message-transmission requests of the device to which it belongs, to the above transmission data to be mutually exchanged.

In such a case for example, the message permission determination unit 32 determines the number of the permissions to transmit message for each node 10 on the basis of the number of the message-transmission requests and the upper limit value, the number of the message-transmission requests being obtained through the mutual data exchange and the upper limit value being the maximum number of the messages that the entire system can transmit in the second band, and thereby determines the number of the permissions to transmit message for the device to which it belongs.

For example, the message permission determination unit 32 also determines the number of the permissions to transmit message for each node 10 in such a manner that the total value of all the numbers of the permissions to transmit message is smaller than or equal to the upper limit value.

For example, the message permission determination unit 32 also determines the number of the permissions to transmit message for each node 10 on the basis of the number of the message-transmission requests, the upper limit value, and the current priority order of each node device.

The upper-limit-value calculation unit 34 calculates the upper limit value. The upper limit value is calculated by for example using formula (1). Alternatively, the upper limit value is calculated by the "second upper-limit-value calculation method".

When the upper limit value is calculated by the "second upper-limit-value calculation method", the longest-route-delay-time measured value, which is the longest delay time, is first obtained (step S61) by measuring the delay time between each node 10 as illustrated in for example FIG. 15. Then, a prescribed formula using this longest-route-delay-time measured value is used for calculating the upper limit value (step S62). The prescribed formula is for example formula (2); however the scope of the present invention is not limited to this example.

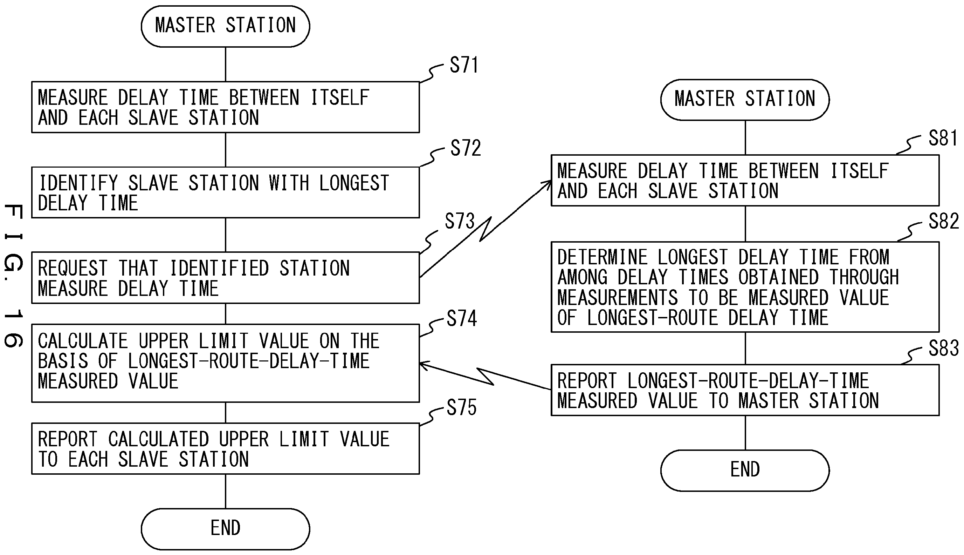

An example of a method of measuring the above longest-route delay time is the method illustrated in FIG. 16; however the scope of the present invention is not limited to this example.

In the process example illustrated in FIG. 16, the upper-limit-value calculation unit 34 of the master station first measures the communication time between the station to which it belongs and each slave station (delay time) (step S71), identifies the slave station with the longest delay time (or, in other words, the longest route from the master station) (step S72), and requests that the identified station measure the delay time (step S73).

The upper-limit-value calculation unit 34 of the identified station measures the delay time between the station to which it belongs and each slave station (step S81), and determines the longest time from among the delay times obtained through the measurements to be the measured value of the longest-route delay time (step S82). Note that the above "delay times obtained through the measurements" include the delay time between the master station and the identified station for example. In such a case, the master station reports the delay time between the master station and the identified station to the identified station when making the request of step S73.

The identified station reports for example the longest-route-delay-time measured value to the master station (step S83). The master station, receiving this report, uses the reported longest-route-delay-time measured value to calculate the upper limit value by a prescribed formula (step S74). The prescribed formula is for example formula (2); however the scope of the present invention is not limited to this example.

Then, the master station reports the calculated upper limit value to each slave station (step S75).

The master station and each slave station will use the newly calculated upper limit value to manage the message transmissions from then on.

Note that while the upper-limit-value calculation unit 34 of the master station may perform the process of calculating the upper limit value by using the measured value of the longest-route delay time through formula (2), the scope of the present invention is not limited to this example, and the upper-limit-value calculation unit 34 of an arbitrary slave station may perform the process. In any case, the calculated upper limit value is reported to all the other stations. Alternatively, the upper-limit-value calculation unit 34 of each station may independently perform the process of calculating the upper limit value, and in such a case, the identified station has to report the longest-route-delay-time measured value to all the other stations while it is not necessary to report the upper limit value to other stations. In any case, the longest-route-delay-time measured value has to be delivered to a device that performs the process of calculating the upper limit value.

A method of obtaining the measured value of the longest-route delay time is not limited to the above example, and for example each of all the nodes 10 measures the delay times between itself and all the other nodes 10 so that an arbitrary node 10 collects the measured values of the delay times of all the nodes 10 and that an arbitrary node 10 obtains the measured value of the longest-route delay time. As described above, various methods may be employed for obtaining the measured value of the longest-route delay time, and any method that "measures the delay time, which is a time taken to perform a communication between each node 10, and obtains the longest-route-delay-time measured value, which is the longest delay time" may be employed.

Note that the master station is not meant to refer to a master device related to the message transmission right management. The present invention does not require a master device related to the message transmission right management. The above master station may be treated just as a station that starts a process of calculating a new upper limit value.

The above process in which the upper-limit-value calculation unit 34 calculates the upper limit value by using formula (2) is performed for example each time the pulling out, joining or rejoining of an arbitrary station is detected. This makes it possible to transport message frames while automatically adjusting the number of the frames at the upper limit of the number of the message frame transmission permissions appropriate to a system configuration that has changed even when the system configuration has changed (pulling out, joining, rejoining, etc. of a station).

Note that for example the process unit 12 or a combination of the process unit 12 and the driver 11 implements the functions of the data exchange control unit 31, the message permission determination unit 32, the message transmission control unit 33, and the upper-limit-value calculation unit 34. The process unit 12 and the driver 11 implement the functions of the data exchange control unit 31, the message permission determination unit 32, the message transmission control unit 33, and the upper-limit-value calculation unit 34 with a CPU/MPU etc. (not illustrated) that are included in them executing a program that is stored in advance in an embedded memory (not illustrated).

The present invention can increase the efficiency in transporting messages for the entire full-duplex network of a star topology and can increase the amount of messages transported per unit time for the entire network so that more messages can be transmitted than in the conventional techniques.

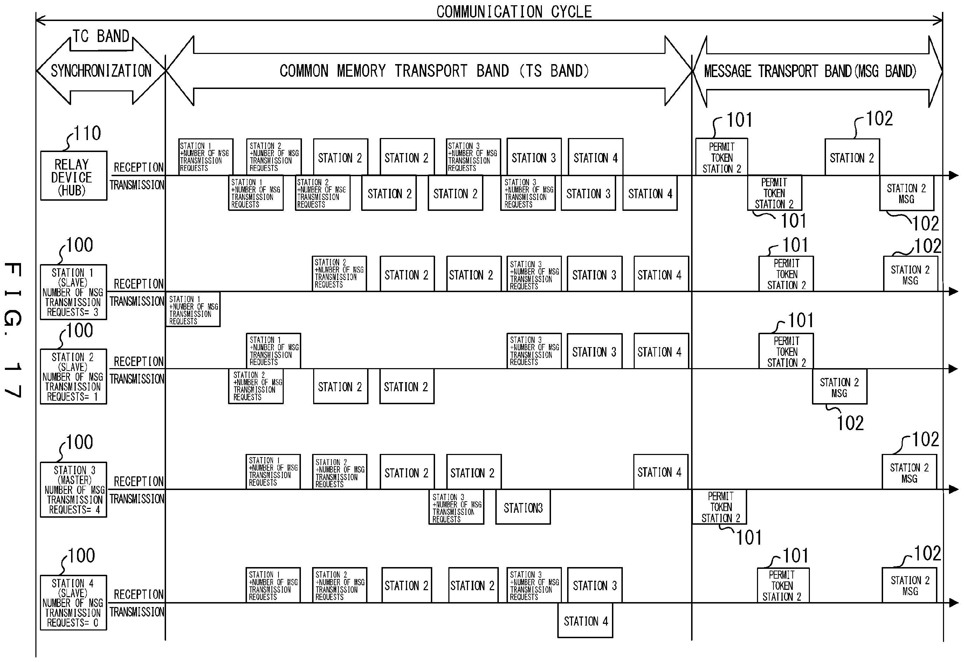

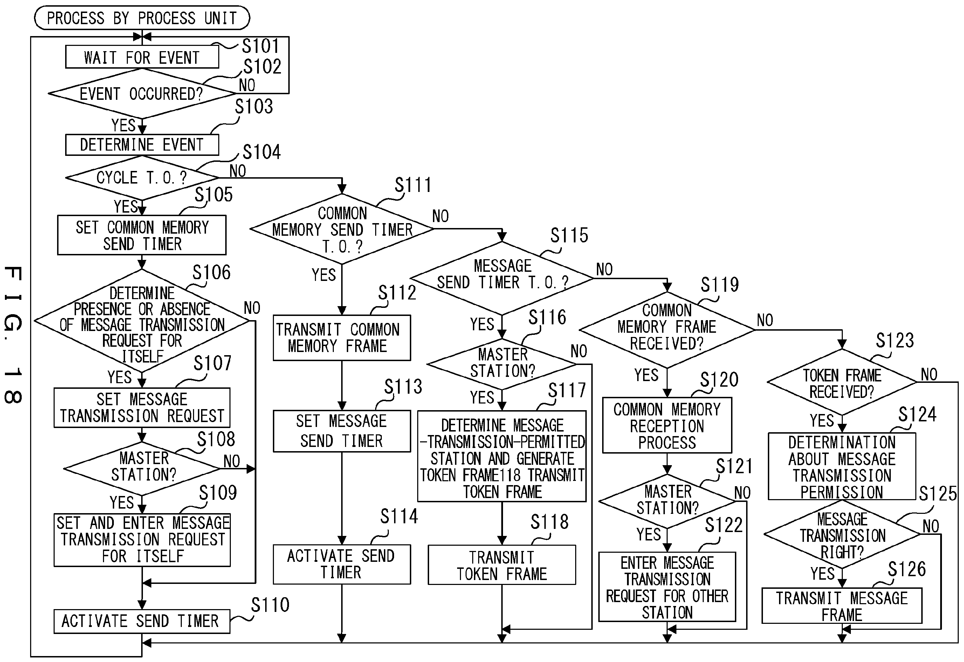

As the last explanations, a case where the conventional techniques are applied to a network of a star topology will be described for comparison with the present invention by referring to FIG. 17 and FIG. 18.

FIG. 17 illustrates a specific example of a communication operation in the above network system of a star topology.

While the configuration of the network system of a star topology will not be illustrated, the configuration is assumed to include four nodes 100 (station 1, station 2, station 3, and station 4) and one relay device (HUB) 110 as illustrated in FIG. 17. Each of the nodes 100 is connected to the relay device 110 via a communication line and transmits and receives data with other nodes 100 via the relay device 110. When receiving an arbitrary data frame transmitted from an arbitrary node 100, the relay device 110 temporarily stores the frame in the embedded memory, and relays/forwards the frame to the destination node 100.

The relay device 110 includes ports connected to the above communication lines, has information about the combinations between the ports and the communication lines (i.e., which node 10 has its communication line connected to which port), and transmits the above temporarily stored data frame so as to relay/forward it.

In the example illustrated in FIG. 17, the communication cycle is time divided into a plurality of bands, i.e., a common memory transport band (TS band), a message transport band (MSB band), etc.

The TS band guarantees the above real-time property for data communication (data exchange), and requires each of all the nodes 100 to deliver its data to all the other nodes 100.

In the illustrated example, data in the TS band is transmitted and received in a manner similar to that in other techniques including the above earlier applications (Patent Documents 1 and 2), and all the nodes 100 transmit their data at timings different from the others although this will not be described herein in detail. All the pieces of the data are broadcast (addressed to all the stations other than the station as the transmission source), and is first transmitted toward the relay device 110. Thereby, the relay device 110 forwards the received data to all the stations other than the transmission source. This makes it possible for all the stations to deliver their data to all the other stations.

It is assumed in the illustrated example that station 3 is the master station and all the other stations are slave stations. A station with a message-transmission request adds, upon the transmission of data of itself in the TS band, the message-transmission request to the data to be transmitted. As described above, because the transmitted data is delivered to all stations including station 3, which is serving as the master station, and thus station 3 will receive the message-transmission request.

In the illustrated example, station 1, station 2, and station 3 (i.e., all the stations other than station 4) have transmitted data to which the message-transmission request has been added. Note that a station that is to transmit a plurality of data frames adds the message-transmission request only to for example the first data frame for the transmission of the frames.

Then, station 3, serving as the master station, determines a permitted station by using a known permitted-station determination method (for example by giving a priority order such as in a round-robin method etc.) on the basis of these message-transmission requests. Station 3 then reports, to each station, information about transmission-right-allotted station (station number etc. of the allotted station) in the form of token frame. It is assumed in the illustrated example that station 2 is a message-transmission-permitted station. Accordingly, station 3 transmits a token 101 that permits station 2 when the MSB band starts. In the illustrated example, a token is addressed to all the stations (broadcast), and the relay device 110 thus forwards this token 101 to all the stations (station 1, station 2, and station 4) other than the transmission source.

Thereafter, each station determines whether it is permitted to transmit message, on the basis of the received token 101, and transmits a message when transmission is permitted. Because a transmission right is allotted to station 2 in this example as described above, station 2, when receiving the token 101, transmits a message frame 102 of itself ("station 2 MSG" in the figure).

Note in the illustrated example that this message 102 is addressed to all the stations (to be broadcast), and the relay device 110 thus forwards this message 102 to all the stations (station 1, station 3, and station 4) other than the transmission source.

The master station (station 3), when permitting a plurality of stations, next transmits a token frame to permit a different station, and the permitted station, receiving this token frame, starts transmitting its data similarly to the above, although this is not illustrated.

FIG. 18 is a flowchart illustrating a process example performed by the process unit in each station in a case where a conventional technique is applied.

The process unit uses a cycle timer synchronized with the timer of the master station by a known station-synchronization method such as that in Patent Document 2 etc. and a send timer for transporting a common memory message and a message to perform a prescribed process for each event of the expiration of each timer and an event of receiving various types of frames.

The process illustrated in FIG. 18 is executed on an as-needed basis, and basically is in an event-waiting state (step S101), and each time an event occurs (YES in step S102), the content of the event (step S103) is determined so that a process appropriate to that event is performed.

In other words, when the event that has occurred is the expiration of the cycle timer (cycle T.O.) (YES in step S104), the processes in step S105 through step S110 are performed.

In other words, whereas a prescribed setting value is basically set for the common memory send timer (step S105) so as to activate that common memory send timer (step S110), the processes in step S106 through step S109 are performed before the activation.

Specifically, the process unit first confirms the presence or absence of a message-transmission request of the station to which it belongs, and sets a message-transmission request (step S107) when there exists such a request (YES in step S106) . Note that "set a request" means storing the request in a common memory frame. Thereby, when a common memory frame is transmitted in the process in step S112, which will be described later, all the stations will receive the common memory frame through the relay process performed by a relay device such as a HUB etc. Thereby, of course the master station will also receive a common memory frame so as to recognize the message-transmission request.

Further, when the station to which the process unit belongs is the master station (YES in step S108), it enters the message-transmission request of the station to which it belongs (step S109). Note that "enter a request" means for example "storing the request in an entry table (not illustrated) for performing transmission right management". Note that a message-transmission request of a different station is also entered as in step S122, which will be described later. In step S117, which will be described later, permitted station determination is performed on the basis of the entered message-transmission request.

Also, when the event that has occurred is the expiration of the common memory send timer (common memory send T.O.) (YES in step S111), i.e., when a transmission timing arrives for data of the station to which the process unit belongs in the TS band, the process unit transmits the data of the station to which the process unit belongs (common memory frame) (step S112) . In this, the data of the station to which the process unit belongs (common memory frame) is transmitted via a driver (not illustrated), in some cases with a message-transmission request added to the frame.

Subsequently to step S112, the message send timer is further set (step S113) and that message send timer is activated (step S114). Note that when the message send timer expires after that activation, the determination in step S115, which will be described later, becomes YES. Note that the processes in steps S113 and S114 may be performed only by the master station.

Also, when the event that has occurred is the expiration of the message send timer (message send T.O.) (YES in step S115) and the station to which the process unit belongs is the master station (YES in step S116), the message-transmission-permitted station determination is performed on the basis of the information stored in the "entry table for performing transmission right management" so as to generate a token frame on the basis of the determination result (step S117), and transmits the token frame (step S118).

Note that the message-transmission-permitted station determination process in step S117 can be performed by an arbitrary known method, and for example equal allotment, priority-order allotment such as "weighted round-robin" etc. , a combination of them, or other arbitrary existing techniques may be employed although this will not be explained. In any case, methods for the determination are not limited, and any method may be employed including a known technique, a combination of known techniques, etc.

When the event that has occurred is the reception of a common memory frame (YES in step S119), the reception process is performed for this common memory frame (for example, the common memory frame is stored in a suitable area of a common memory (not illustrate)) (step S120).

Further, when the station to which the process unit belongs is the master station (YES in step S121) and a received common memory frame has a message-transmission request added to it, the process unit enters that message-transmission request of a different station (step S122).

When the event that has occurred is the reception of the token frame transmitted in step S118 from the master station (YES in step S123), the process unit refers to the token frame, which contains the station number etc. of the permitted station, so as to determine whether the station to which it belongs is a permitted station (step S124), and transmits a message frame of the station to which it belongs if the station to which it belongs is a permitted station (YES in step S125) (i.e., if the station to which it belongs has been granted a transmission right) (step S126).

As described above, a network system of a star topology to which the conventional techniques are applied has efficiency lower mainly by a time related to the transmission and reception of tokens, leading to the reduction in the number of messages that can be transmitted and received in an MSB band.

By contrast, the present invention can solve this problem as described above.

The control network system and the node device, etc. thereof according to the present invention can improve the efficiency in transporting messages for the entire full-duplex circuit of a star topology and can improve the amount of messages transported per unit time for the entire network.

**Claims**

1. A node device (10) that is one of a plurality of node devices in a network system in which the plurality of node devices mutually exchange data via a relay device in each communication cycle that includes a first band and a second band, the second band being later than the first band, and the node device comprising:

   a data exchange control unit (31) configured to transmit a message-transmission request to other node devices of the plurality of node devices in the first band when there exists a message-transmission request;
   a message permission determination unit (32) configured to determine, on the basis of a message-transmission request transmitted by the plurality of node devices and obtained in the first band, whether the node device to which the message permission determination unit (32) belongs is permitted to transmit a message; and
   a message transmission control unit (33) configured to transmit a message at a prescribed timing in the second band if the node device to which the message transmission control unit belongs (33) is determined to be permitted to transmit message by the message permission determination unit (32).

2. A control network system comprising a plurality of the node devices (10) according to claim 1.

3. The control network system according to claim 2, wherein
   the network system is a network system of a full-duplex circuit of a star topology.

4. The control network system according to claim 2, wherein
   the prescribed timing is when the second band starts.

5. The control network system according to claim 4, wherein
   each of the node devices simultaneously starts transmitting the message when the second band starts.

6. The control network system according to one of claims 2 through 5, wherein
   the data exchange control unit (31) adds a number of message-transmission requests of the node device to which the data exchange control unit (31) belongs, to the message-transmission request, and
   the message permission determination unit (32) determines a number of permissions to transmit a message for each of the node devices on the basis of the number of the message-transmission requests obtained in the first band, an upper limit value, which is a maximum number of messages that an entire system can transmit in the second band, and a priority order of each node device, and thereby determines a number of permissions to transmit a message for the node device to which the message permission determination unit (32) belongs.

7. The control network system according to claim 6, wherein
   the upper limit value is calculated by formula (1) below:

**upper limit value = {unit time-(number of stages of relay device×relay device delay)-((number of stages of relay device+1)×frame transport delay)}/{(size of one frame/transport capacity)+α}   formula (1).**

8. The control network system according to claim 6, wherein
   a delay time, which is a time taken to perform a communication between each of the node devices (10), is measured and a longest-route-delay-time measured value, which is a longest delay time, is obtained, and the upper limit value is calculated by a prescribed formula that uses the longest-route-delay-time measured value.

9. The control network system according to claim 8, wherein
the upper limit value is calculated by formula (2) below:

upper limit value={(unit time-(longest-route-delay-time measured value-(size of one frame/transport capacity)))}/(size of one frame/transport capacity)   formula   (2).

10. The control network system according to claim 6, wherein
at least one of the node devices (10) further includes an upper limit value calculation unit (34) configured to calculate
the upper limit value.

**Patentansprüche**

1. Knotenvorrichtung (10), die eine aus mehreren Knotenvorrichtungen in einem Netzwerksystem ist, wobei die mehreren Knotenvorrichtungen gemeinsam Daten über eine Weiterleitungsvorrichtung in jedem Kommunikationszyklus austauschen, der ein erstes Band und ein zweites Band umfasst, wobei das zweite Band später als das erste Band erfolgt und die Knotenvorrichtung umfasst:

   eine Datenaustauschsteuereinheit (31), die konfiguriert ist, eine Nachrichtenübertragungsanforderung an andere Knotenvorrichtungen aus den mehreren Knotenvorrichtungen im ersten Band zu senden, wenn eine Nachrichtenübertragungsanforderung existiert;
   eine Nachrichtengenehmigungsbestimmungseinheit (32), die konfiguriert ist, auf der Basis einer Nachrichtenübertragungsanforderung, die von den mehreren Knotenvorrichtungen übertragen und in dem ersten Band erhalten werden, zu bestimmen, ob die Knotenvorrichtung, zu der die Nachrichtengenehmigungsbestimmungseinheit (32) gehört, die Genehmigung hat, eine Nachricht zu übertragen; und
   eine Nachrichtenübertragungssteuereinheit (33), die konfiguriert ist, eine Nachricht zu einem vorgeschriebenen Zeitpunkt in dem zweiten Band zu senden, wenn die Knotenvorrichtung, zu der die Nachrichtenübertragungssteuereinheit (33) gehört, von der Nachrichtengenehmigungsbestimmungseinheit (32) als zum Senden einer Nachricht zugelassen bestimmt wird.

2. Steuernetzwerksystem, das mehrere Knotenvorrichtungen (10) nach Anspruch 1 umfasst.

3. Steuernetzwerksystem nach Anspruch 2, wobei das Netzwerksystem ein Netzwerksystem einer Vollduplexschaltung einer Sterntopologie ist.

4. Steuernetzwerksystem nach Anspruch 2, wobei
das vorgeschriebene Timing der Beginn des zweiten Bandes ist.

5. Steuernetzwerksystem nach Anspruch 4, wobei
jede der Knotenvorrichtungen gleichzeitig mit dem Senden der Nachricht beginnt, wenn das zweite Band beginnt.

6. Steuernetzwerksystem nach einem der Ansprüche 2 bis 5, wobei
die Datenaustauschsteuereinheit (31) der Nachrichtenübertragungsanforderung eine Anzahl an Nachrichtenübertragungsanforderungen der Knotenvorrichtung, zu der die Datenaustauschsteuereinheit (31) gehört, hinzufügt, und
die Nachrichtengenehmigungsbestimmungseinheit (32) eine Anzahl an Genehmigungen zum Übertragen einer Nachricht für jede der Knotenvorrichtungen basierend auf der Anzahl der im ersten Band erhaltenen Nachrichtenübertragungsanforderungen, einem oberen Grenzwert, der eine maximale Anzahl an Nachrichten ist, die ein Gesamtsystem im zweiten Band übertragen kann, und einer Prioritätsreihenfolge von jeder Knotenvorrichtung bestimmt und dadurch eine Anzahl an Berechtigungen zum Senden einer Nachricht für die Knotenvorrichtung, zu der die Nachrichtengenehmigungsbestimmungseinheit (32) gehört, bestimmt.

7. Steuernetzwerksystem nach Anspruch 6, wobei der obere Grenzwert durch die nachstehende Formel (1) berechnet wird:

```
Oberer Grenzwert = {Zeiteinheit-(Anzahl an Stufen der
Weiterleitungsvorrichtung   x   Weiterleitungsvorrich-
tungsverzögerung)-((Anzahl an Stufen der Weiterlei-
tungsvorrichtung+1)   x   Rahmentransportverzöge-
rung)}/{(Größe   eines   Rahmens/Transportkapazität)+α}
          Formel (1).
```

8. Steuernetzwerksystem nach Anspruch 6, wobei
eine Verzögerungszeit, die eine Zeit ist, die benötigt wird, um eine Kommunikation zwischen den einzelnen Knotenvorrichtungen (10) auszuführen, gemessen wird und ein Messwert für die längste Wegverzögerungszeit, die eine längste Verzögerungszeit ist, erhalten wird und der obere Grenzwert durch eine vorgeschriebene Formel berechnet wird, die den Messwert für die längste Wegverzögerungszeit verwendet.

9. Steuernetzwerksystem nach Anspruch 8, wobei
der obere Grenzwert durch die nachstehende Formel (2) berechnet wird:

```
Oberer Grenzwert = {(Zeiteinheit-(Längste-Wegverzöge-
rungszeitmesswert-(Größe   eines   Rahmens/Transportkapa-
zität)))}/(Größe   eines   Rahmens/Transportkapazität)
          Formel (2).
```

10. Steuernetzwerksystem nach Anspruch 6, wobei mindestens eine der Knotenvorrichtungen (10) ferner eine Oberer-Grenzwert-Berechnungseinheit (34) umfasst, die konfiguriert ist, den oberen Grenzwert zu berechnen.

**Revendications**

1. Dispositif de nœud (10) qui est l'un d'une pluralité de dispositifs de nœud dans un système de réseau où la pluralité des dispositifs de nœud échangent mutuellement des données via un dispositif de relais dans chaque cycle de communication qui inclus une première bande et une deuxième bande, la deuxième bande étant postérieure à la première bande, et le dispositif de nœud comprenant:

une unité de commande d'échange de données (31) configurée pour transmettre une demande de transmission de message à d'autres dispositifs de nœud de la pluralité des dispositifs de nœud dans la première bande lorsqu'il existe une demande de transmission de message;
une unité de détermination d'autorisation de message (32) configurée pour déterminer, sur la base d'une demande de transmission de message transmise par la pluralité des dispositifs de nœud et obtenue dans la première bande, si, oui ou non, le dispositif de nœud auquel appartient l'unité de détermination d'autorisation de message (32) est autorisé à transmettre un message; et
une unité de commande de transmission de message (33) configurée pour transmettre un message à un moment prescrit dans la deuxième bande si le dispositif de nœud auquel appartient l'unité de commande de transmission de message (33) est déterminé comme étant autorisé à transmettre un message par l'unité de détermination d'autorisation de message (32).

2. Système de réseau de commande comprenant une pluralité des dispositifs de nœud (10) selon la revendication 1.

3. Système de réseau de commande selon la revendication 2, dans lequel
le système de réseau est un système de réseau d'un circuit en duplex intégral d'une topologie en étoile.

4. Système de réseau de commande selon la revendication 2, dans lequel
le moment prescrit est quand la deuxième bande débute.

5. Système de réseau de commande selon la revendication 4, dans lequel

chacun des dispositifs de nœud commence simultanément à transmettre le message lorsque la deuxième bande débute.

6. Système de réseau de commande selon l'une des revendications 2 à 5, dans lequel
l'unité de commande d'échange de données (31) ajoute un certain nombre de demandes de transmission de message du dispositif de nœud auquel appartient l'unité de commande d'échange de données (31), à la demande de transmission de message, et
l'unité de détermination d'autorisation de message (32) détermine un certain nombre d'autorisations à transmettre un message pour chacun des dispositifs de nœud sur la base du nombre de demandes de transmission de message obtenues dans la première bande, une valeur limite supérieure, qui est un nombre maximal de messages qu'un système entier peut transmettre dans la deuxième bande, et un ordre de priorité de chaque dispositif de nœud, et détermine ainsi un certain nombre d'autorisations à transmettre un message pour le dispositif de nœud auquel appartient l'unité de détermination d'autorisation de message (32).

7. Système de réseau de commande selon la revendication 6, dans lequel
la valeur limite supérieure est calculée grâce à la formule (1) ci-dessous:

```
valeur limite supérieure = {unité de temps-(nombre
d'étages du dispositif de relais x retard dispositif de
relais)-((nombre d'étages du dispositif de relais + 1)
x retard de transport de trame)}/{(taille d'une
trame/capacité de transport)+α}    formule (1).
```

8. Système de réseau de commande selon la revendication 6, dans lequel
un temps de retard, qui est un temps pris pour réaliser une communication entre chacun des dispositifs de nœud (10), est mesuré, et une valeur mesurée de temps de retard de routage le plus long, qui est un temps de retard le plus long, est obtenue, et la valeur limite supérieure est calculée grâce à une formule prescrite qui utilise la valeur mesurée de temps de retard de routage le plus long.

9. Système de réseau de commande selon la revendication 8, dans lequel
la valeur limite supérieure est calculée grâce à la formule (2) ci-dessous:

```
valeur limite supérieure = {(unité de temps-(valeur
mesurée de temps de retard de routage le plus long-
(taille d'une trame/capacité de transport)))}/(taille
d'une trame/capacité de transport) formule (2).
```

10. Système de réseau de commande selon la revendication 6, dans lequel
au moins l'un des dispositifs de nœud (10) comprend en outre une unité de calcul de valeur limite supérieure (34) configurée pour calculer la valeur limite supérieure.

F I G .  1

SEND

S11

RECEIVE
REQUEST

S12

TRANSMIT

(a)

RCV

S21

FRAME
DETERMINATION OTHER
STATION?

NO

YES

S23

DISCARD

END

S24

SAME PACKET
RECEIVED?

YES

NO

S26

DISCARD

DELIVER TO
PROCESS UNIT

S25

END

(b)

F I G． 2

EP 3 396 901 B1

FIG. 3

F I G. 4

```
            ( PROCESS BY PROCESS UNIT )
                        │
                        ▼
              ┌──────────────────────┐
              │   WAIT FOR EVENT     │～S31
              └──────────────────────┘
                        │
                    ╱───────────╲         NO
                   ╱    EVENT     ╲──────────────────────────────────────┐
                   ╲  OCCURRED?   ╱                                        │
                    ╲───────────╱  ～S32                                   │
                        │ YES        ～S33                                 │
              ┌──────────────────────┐                                    │
              │   DETERMINE EVENT    │                                    │
              └──────────────────────┘                                    │
                        │                                                  │
                    ╱───────────╲    NO                                    │
                   ╱  CYCLE T.O.? ╲──────────────┐                         │
                   ╲             ╱  ～S34         │                        │
                    ╲───────────╱                 ▼                         │
                        │ YES              ╱─────────────╲   NO            │
                        │                 ╱    COMMON      ╲────────┐       │
                ～S35   ▼                ╱ MEMORY SEND TIMER╲       │       │
              ┌──────────────────┐      ╲     T.O.?        ╱  ～S39 ▼       │
              │  SET COMMON MEMORY│      ╲───────────────╱    ╱────────────╲  NO
              │    SEND TIMER     │          │ YES          ╱    MESSAGE    ╲─────────┐
              └──────────────────┘           │   ～S40      ╲ SEND TIMER T.O.?╱ ～S43  │
                        │             ┌──────────────┐       ╲──────────────╱         ▼
                    ╱────────╲        │TRANSMIT COMMON│          │ YES          ╱──────────────╲  NO
                   ╱ DETERMINE ╲       │ MEMORY FRAME │    ～S44  ▼              ╱    COMMON      ╲──┐
                  ╱ PRESENCE OR ╲      └──────────────┘   ┌──────────────┐     ╲ MEMORY FRAME    ╱  │
                  ╲ ABSENCE OF   ╱～S36        │          │DETERMINE MESSAGE│    ╲  RECEIVED?    ╱   │
                  ╲ MESSAGE      ╱  NO         │ ～S41     │ -TRANSMISSION  │     ╲──────────────╱～S48│
                   ╲TRANSMISSION╱────┐  ┌──────────────┐  │-PERMITTED STATION│        │ YES  ～S49    │
                    ╲REQUEST FOR╱    │  │ SET MESSAGE  │  └──────────────┘     ┌──────────────┐      │
                     ╲ ITSELF  ╱     │  │  SEND TIMER  │         │            │ COMMON MEMORY │      │
                      ╲──────╱       │  └──────────────┘         ▼            │RECEPTION PROCESS│    │
                        │ YES        │         │          ┌──────────────┐     └──────────────┘     │
                        │   ～S37    │         │ ～S42     │DETERMINE WHETHER│       ⋰ FIX NUMBER ⋱  │
              ┌──────────────────┐   │  ┌──────────────┐  │MESSAGE TRANSMISSION│   ⋰ OF MESSAGE  ⋱  │
              │ SET AND ENTER    │   │  │ACTIVATE SEND │  │  IS POSSIBLE   │    ⋰TRANSMISSION ⋱    │
              │MESSAGE TRANSMISSION│ │  │    TIMER     │  └──────────────┘    ⋱ PERMISSIONS  ⋰     │
              │    REQUEST       │   │  └──────────────┘    ～S45  │          ⋱ ⋰              │
              └──────────────────┘   │         │              ╱────────────╲                       │
                        │            │         │             ╱ ARE THERE     ╲                      │
                        │ ～S38      │         │            ╱MESSAGE TRANSMISSION╲ NO                │
              ┌──────────────────┐   │         │            ╲REQUEST AND MESSAGE ╱───────┐          │
              │ACTIVATE SEND TIMER│  │         │             ╲ TRANSMISSION    ╱ ～S46    │          │
              └──────────────────┘   │         │              ╲  RIGHT?      ╱           │          │
                        │            │         │               ╲──────────╱              │ ～S50    │
                        │            │         │                   │ YES ～S47   ┌──────────────┐    │
                        │            │         │          ┌──────────────────┐  │ENTER MESSAGE  │    │
                        │            │         │          │TRANSMIT MESSAGE FRAME│ │TRANSMISSION  │    │
                        │            │         │          └──────────────────┘  │REQUEST OF     │    │
                        │            │         │                   │            │OTHER STATION  │    │
                        │            │         │                   │            └──────────────┘    │
                        │            │         │                   │                   │            │
                        └────────────┴─────────┴───────────────────┴───────────────────┴────────────┘
```

MESSAGE TRANSPORT BAND(MSG BAND)

UNIT TIME

FRAME TRANSPORT DELAY

20

HUB—A

RECEPTION

STATION 1-1 MSG | STATION 1-2 MSG | STATION 1-3 MSG | STATION 1-4 MSG

TRANSMISSION

STATION 1-1 MSG | STATION 1-2 MSG | STATION 1-3 MSG | STATION 1-4 MSG

RELAY DEVICE DELAY

$\beta$

$\alpha$

SIZE OF ONE FRAME / TRANSPORT CAPACITY = TRANSPORT TIME FOR ONE FRAME

{(UNIT TIME)−(NUMBER OF STAGES OF RELAY DEVICE × RELAY DEVICE DELAY) −((NUMBER OF STAGES OF RELAY DEVICE + 1) × (FRAME TRANSPORT DELAY))} /{(SIZE OF ONE FRAME/ TRANSPORT CAPACITY) + $\alpha$}

10

STATION 1

RECEPTION

TRANSMISSION

STATION 1-1 MSG | STATION 1-2 MSG | STATION 1-3 MSG | STATION 1-4 MSG

$\beta$

10

STATION 2

RECEPTION

STATION 1-1 MSG | STATION 1-2 MSG | STATION 1-3 MSG | STATION 1-4 MSG

TRANSMISSION

FRAME TRANSPORT DELAY

10

STATION 3

RECEPTION

STATION 1-1 MSG | STATION 1-2 MSG | STATION 1-3 MSG | STATION 1-4 MSG

TRANSMISSION

10

STATION 4

RECEPTION

STATION 1-1 MSG | STATION 1-2 MSG | STATION 1-3 MSG | STATION 1-4 MSG

TRANSMISSION

F I G. 6

F I G. 7

F I G. 8

F I G. 9

F I G.  1 0

F I G. 1 1

A:STATION 3+LONGEST-ROUTE MEASUREMENT REQUEST ADDRESSED TO STATION 1
B: DELAY-TIME MEASUREMENT REQUEST ADDRESSED TO STATION 1/STATION 2
C: STATION 2 DELAY-TIME RESPONSE
D: NO MSG TRANSMISSION

EP 3 396 901 B1

F I G.  1 2

F I G. 1 3

EP 3 396 901 B1

MESSAGE TRANSPORT BAND

UNIT TIME
FRAME TRANSPORT DELAY
HUB RELAY DELAY
LONGEST-ROUTE -DELAY-TIME MEASURED VALUE
LONGEST-ROUTE DELAY TIME
SIZE OF ONE FRAME / TRANSPORT CAPACITY = TRANSPORT TIME FOR ONE FRAME

CIRCUIT

HUB-A
RECEPTION — STATION 1-1 MSG | STATION 1-2 MSG | STATION 1-3 MSG | STATION 1-4 MSG
TRANSMISSION — STATION 1-1 MSG | STATION 1-2 MSG | STATION 1-3 MSG | STATION 1-4 MSG

HUB-B
RECEPTION — STATION 1-1 MSG | STATION 1-2 MSG | STATION 1-3 MSG | STATION 1-4 MSG
TRANSMISSION — STATION 1-1 MSG | STATION 1-2 MSG | STATION 1-3 MSG | STATION 1-4 MSG

HUB-C
RECEPTION — STATION 1-1 MSG | STATION 1-2 MSG | STATION 1-3 MSG | STATION 1-4 MSG
TRANSMISSION — STATION 1-1 MSG | STATION 1-2 MSG | STATION 1-3 MSG | STATION 1-4 MSG

STATION 1 (SLAVE)
RECEPTION
TRANSMISSION — STATION 1-1 MSG | STATION 1-2 MSG | STATION 1-3 MSG | STATION 1-4 MSG

STATION 2 (SLAVE)
RECEPTION — STATION 1-1 MSG | STATION 1-2 MSG | STATION 1-3 MSG | STATION 1-4 MSG
TRANSMISSION

STATION 3 (MASTER)
RECEPTION — STATION 1-1 MSG | STATION 1-2 MSG | STATION 1-3 MSG | STATION 1-4 MSG
TRANSMISSION

STATION 4 (SLAVE)
RECEPTION — STATION 1-1 MSG | STATION 1-2 MSG | STATION 1-3 MSG | STATION 1-4 MSG
TRANSMISSION

10

DATA EXCHANGE CONTROL UNIT — 31

MESSAGE PERMISSION DETERMINATION UNIT — 32

MESSAGE TRANSMISSION CONTROL UNIT — 33

UPPER-LIMIT-VALUE CALCULATION UNIT — 34

F I G.  1 4

MEASURE DELAY TIME BETWEEN EACH NODE 10 AND OBTAIN LONGEST-ROUTE-DELAY-TIME MEASURED VALUE AS LONGEST DELAY TIME — S61

CALCULATE UPPER LIMIT VALUE BY PRESCRIBED FORMULA(*1) THAT USES LONGEST-ROUTE-DELAY-TIME MEASURED VALUE — S62

*1: UPPER LIMIT VALUE = {(UNIT TIME − (LONGEST-ROUTE
−DELAY-TIME MEASURED VALUE − (SIZE OF ONE FRAME / TRANSPORT
CAPACITY)))} / (SIZE OF ONE FRAME / TRANSPORT CAPACITY)

F I G.  1 5

EP 3 396 901 B1

FIG. 16

MASTER STATION

↓

MEASURE DELAY TIME BETWEEN ITSELF AND EACH SLAVE STATION — S71

↓

IDENTIFY SLAVE STATION WITH LONGEST DELAY TIME — S72

↓

REQUEST THAT IDENTIFIED STATION MEASURE DELAY TIME — S73

↓

CALCULATE UPPER LIMIT VALUE ON THE BASIS OF LONGEST-ROUTE-DELAY-TIME MEASURED VALUE — S74

↓

REPORT CALCULATED UPPER LIMIT VALUE TO EACH SLAVE STATION — S75

↓

END

MASTER STATION

↓

MEASURE DELAY TIME BETWEEN ITSELF AND EACH SLAVE STATION — S81

↓

DETERMINE LONGEST DELAY TIME FROM AMONG DELAY TIMES OBTAINED THROUGH MEASUREMENTS TO BE MEASURED VALUE OF LONGEST-ROUTE DELAY TIME — S82

↓

REPORT LONGEST-ROUTE-DELAY-TIME MEASURED VALUE TO MASTER STATION — S83

↓

END

F I G. 1 7

F I G .  1 8

**EP 3 396 901 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2375632 A1
- JP 2005159754 A

- WO 2013121568 A